# EUROPÄISCHE PATENTSCHRIFT

(11) **EP 4 459 135 B1**
(45) Veröffentlichungstag und Bekanntmachung des Hinweises auf die Patenterteilung: **08.07.2026**
(21) Anmeldenummer: 23171011.2
(22) Anmeldetag: 02.05.2023
(51) Int. Cl.: F16B 2/24, F16B 15/00

(54) **VERBINDUNGSANORDNUNG MIT EINEM BEFESTIGUNGSELEMENT EINES T-FÖRMIGEN PROFILSCHLAUCHS, SETZGERÄT SOWIE VERBINDUNGSVERFAHREN**
CONNECTION ASSEMBLY WITH A FASTENING ELEMENT OF A T-SHAPED PROFILED TUBE, SETTING DEVICE AND CONNECTION METHOD
AGENCEMENT DE CONNEXION DOTÉ D'UN ÉLÉMENT DE FIXATION D'UN TUYAU PROFILÉ EN FORME DE T, APPAREIL DE POSE ET PROCÉDÉ DE CONNEXION

(43) Veröffentlichungstag der Anmeldung: 06.11.2024
(73) Patentinhaber: Böllhoff Verbindungstechnik GmbH, 33649 Bielefeld (DE)
(72) Erfinder: WESTERMANN, Wilhelm, 33719 Bielefeld (DE); JÜTTE, Hubert, 33613 Bielefeld (DE); ROESCHERT, Benjamin, 33189 Schlangen (DE); HAESLER, Bernd, 33790 Halle (DE); SCHIENSTOCK, Oliver, 33129 Delbrück (DE); DOEDTMANN, Kilian, 49565 Bramsche (DE)
(74) Vertreter: HWP Intellectual Property

(56) Entgegenhaltungen:
- DE-A1- 4 123 970
- FR-A- 1 031 194
- US-A- 3 967 524
- US-B2- 9 434 323

## Beschreibung

### 1. Gebiet der Erfindung

Die vorliegende Erfindung betrifft eine Verbindungsanordnung zur Verbindung eines T-förmigen Profilschlauchs aus einem polymeren Material mit einem Setzgerät oder einem weiteren T-förmigen Profilschlauch, ein Setzgerät sowie ein Verbindungsverfahren.

### 2. Hintergrund der Erfindung

Profilschläuche oder Führungsrohre zur Beförderung von T-förmigen Elementen oder Teilen, wie beispielsweise Bolzen oder Niete, werden untereinander oder an einem Verarbeitungsgerät, beispielsweise einem Setzgerät oder Magazin, üblicherweise mit einem Flanschanschluss angeschraubt. Die T-förmigen Kanäle im Inneren der Profilschläuche, Führungsrohre und Verarbeitungsgeräte müssen idealerweise in Bewegungsrichtung des T-förmigen Elements stufenlos ineinander übergehen, um ein Verkanten des T-förmigen Elements an den Übergangsstellen zu vermeiden.

Im Stand der Technik existieren verschiedene Lösungen zur Verbindung eines Profilschlauchs mit einem Verarbeitungsgerät oder mit einer Kupplung zur Verbindung mit einem weiteren Profilschlauch. So kann zur Fixierung auf ein Ende des Profilschlauchs ein metallisches Endstück aufgeklebt werden, das eine Geometrie zur formschlüssigen Fixierung des Profilschlauchs in einem Anschlussstück aufweist. Ein solcher Aufbau ergibt sich beispielsweise aus KR 2013-0009708 A.

Eine weitere Stand-der-Technik-Lösung ist in GB 2,300,183 A beschrieben. Die beschriebene Zuführleitung zum Transport von Befestigungselementen weist eine Eintritts- und eine Austrittsöffnung auf. Weiterhin befindet sich zwischen der Eintritts- und der Austrittsöffnung ein Transportkanal, der sich in Längsrichtung der Zuführleitung erstrecket und durch eine Wandung begrenzt ist. Wenigstens eine Führungsbahn ist zumindest teilweise an der Wandung vorgesehen, wobei die Führungsbahn eine höhere Abriebfestigkeit als die Wandung aufweist.

DE 10 2016 210 799 A1 beschreibt eine Kupplungsvorrichtung zum Verbinden lang gestreckter Hohlkörper, wie beispielsweise Profilschläuchen, in einem Montagesystem. Die Kupplungsvorrichtung umfasst eine erste Aufnahmeöffnung zur Aufnahme eines ersten lang gestreckten Hohlkörpers und eine zweite Aufnahmeöffnung zur Aufnahme eines zweiten lang gestreckten Hohlkörpers. Die Aufnahmeöffnungen sind dabei derart relativ zueinander angeordnet, dass der erste und der zweite lang gestreckter Hohlkörper nach einem Einführen in die jeweiligen Aufnahmeöffnungen miteinander koppelbar sind.

Eine Transportvorrichtung für Bauteile, ein Adapter zur Verwendung in einer solchen Transportvorrichtung sowie ein Verfahren zur Herstellung eines solchen Adapters sind weiterhin in DE 10 2005 000 127 A1 beschrieben. Bei der Vorrichtung zum Transport von Bauteilen in einer Förderstrecke zwischen einer Bevorratungsstation und einer Empfangsstation mittels eines in Transportrichtung gerichteten Volumenstroms eines gasförmigen Arbeitsmediums, mit einer der Bevorratungsstation zugeordneten Bauteileinspeisung zum Einbringen eines zu transportierenden Bauteils in den Volumenstrom in der Förderstrecke, ist ein Ende der Förderstrecke an der Bauteileinspeisung in einer dafür vorgesehenen einspeisungsseitigen Aufnahme festgelegt. Die Förderstrecke weist an ihrem an der Bauteileinspeisung festgelegten oder festlegbaren Ende einen Adapter auf. Dieser umschließt das Ende der Förderstrecke form- und/oder stoffschlüssig. Weiterhin ist er hinsichtlich seiner Außenkontur formschlüssig zur einspeisungsseitigen Aufnahme ausgebildet.

Ein weiteres Beispiel findet sich in JP 2004-203605A. Hier ist ein Förderschlauch zum reibungslosen Fördern eines Teils beschrieben, das aus einem kreis- und säulenförmigen Teil und einem Scheibenteil besteht. Ergänzend werden eine entsprechende Befestigungsstruktur und ein Förderverfahren diskutiert. Das Teil wird durch den Förderschlauch befördert. Ein im Schlauch vorgesehener Förderkanal besteht aus einem kanalartigen Raumteil, durch den der kreis- und säulenförmige Teil hindurchtritt, und einem flachen Raumteil, durch den der Scheibenteil hindurchtritt. Klemmelemente des Förderschlauchs sind an einem stationären Element befestigt, und ein Spitzenteil eines Positionierungsbolzens, der in die Klemmelemente geschraubt ist, greift in eine Außenumfangsfläche des Förderschlauchs ein. In dem Förderkanal wird an dem Teil Auftrieb durch Förderluft erzeugt, sodass das Teil in stabiler Lage gefördert und der Förderschlauch sicher fixiert werden kann.

Diese Lösungen weisen viele verschiedene Bestandteile auf, die Einfluss auf die Toleranzen haben, die an der Übergangsstelle von einem Profilschlauch zu einem anderen Profilschlauch oder einem Setzgerät bzw. Verarbeitungsgerät vorliegen. Insbesondere die oben beschriebene konzentrische Anordnung von Profilschlauch, Endstück und Anschluss- oder Kupplungsstück verursacht eine lange Toleranzkette. Dies führt im Ergebnis dazu, dass die in dem Profilschlauch zu befördernden T-förmigen Elemente oder Teile an den Übergangsstellen von einem Profilschlauch zum nächsten Profilschlauch oder vom Profilschlauch in das Setz- bzw. Verarbeitungsgerät häufig verkanten, was zu einer unerwünschten Unterbrechung des Arbeitsvorgangs führt.

Um dies zu vermeiden und die Toleranzkette zu begrenzen, müssen die Toleranzen des Endstücks, das beispielsweise auf den Profilschlauch aufgeklebt wird, entsprechend klein gefasst werden. Zu diesem Zweck werden die Endstücke üblicherweise aus einem Metallblock heraus erodiert. Diese Vorgehensweise ist jedoch sehr kostenintensiv.

Alternative oder günstigere Fertigungsmethoden weisen nicht die erforderliche Genauigkeit auf, um die großen Fertigungstoleranzen der Kunststoffschläuche auszugleichen. Aus diesem Grund sind diese ungeeignet, die bekannte Vorgehensweise zu ersetzen.

In dieser Hinsicht beschäftigt sich FR 1 031 194 A mit der Montage von dünnwandigen Hohlprofilen aus vulkanisiertem Natur- oder Synthesekautschuk oder Kunstharzen. Die Verbindung der Profile wird durch Klammern erreicht, die in die zu verbindenden Profile eingesetzt werden und diese starr miteinander verbinden, ohne dass ihre Elastizität beeinträchtigt wird. Die Klammern bestehen aus Blech mit einer Dicke von einigen Zehnteln, wobei als Metall gewöhnlicher Stahl, Messing oder Weißblech verwendet wird. Die Klammern weisen eine Außenkontur auf, die der Montageebene der Profile in der Verbindungszone entspricht, wobei in jeden zu verbindenden Profilabschnitt ein Teil oder Schenkel der Klammer eingreift.

US 3,967,524 A beschreibt ein Befestigungselement zum Verbinden von Isolierblöcken mit der Wand eines Kühlschranks oder einer Kühlkammer. Der Befestiger ist mit einer zentralen flachen Rückseite versehen, die mittels Nägeln oder dergleichen an einer Beton- oder anderen starren Wand befestigt wird. Der Verschluss ist außerdem mit einer Vielzahl dünner, in einer Linie angeordneter Spitzen auf jeder Seite der zentralen flachen Rückseite versehen, die in zwei parallelen Linien nach außen vorstehen. Anschließend werden die Spitzen mit einem Klebstoff bedeckt und ein Isolierblock auf die mit Klebstoff bedeckten Spitzen gedrückt. Der Klebstoff versiegelt die Öffnung des Dorns im Dämmblock, was zu maximaler Isolierung und sicheren Halt des Dämmblocks an der Massivwand führt. Die länglichen, dünnen Spitzen weisen an ihren inneren Enden einen Hinterschnitt auf, um als Widerhaken zu dienen.

Ein weiteres Verbindungselement, insbesondere ein Konstruktionsbeschlag, ist in DE 41 23 970 A1 beschrieben. Der Verbindungsbeschlag zum Zusammenhalten zweier Einzelteile weist ein die beiden Teile überragendes Grundelement auf, wobei spitze und/oder scharfe Vorsprünge vom Grundelement abstehen, die krallenartig in das Material der beiden Teile eingreifen. Das Grundelement ist ein flacher Streifen. Die Vorsprünge werden durch abgewinkelte, beabstandete Kanten des Grundkörpers gebildet.

Schließlich ist aus US 9,434,323 B2 ein Verfahren zum Anbringen eines Aufsatzes oder einer Zierleiste an einem Abschnitt eines Profilstreifens oder an einem Abschnitt eines Profilstreifens bekannt, der an der Peripherie einer Glasscheibe befestigt ist, wobei der Anbringungsvorgang durch eine Zwischenbefestigungsvorrichtung durchgeführt wird. Die Zwischenbefestigungsvorrichtung umfasst mindestens einen Clip, der mindestens ein vorgelagertes zum Zusammenwirken mit der Profilleiste ausgebildetes Zusammenwirkungsteil und ein nachgelagertes zum Zusammenwirken mit dem Aufsatz ausgebildetes Zusammenwirkungsteil aufweist. Das Verfahren umfasst das Befestigen der Zwischenbefestigungsvorrichtung an der Profilleiste. Die Zwischenbefestigungsvorrichtung weist ein vorgelagertes Gegenstück mit mehreren verformbaren Rastlaschen auf, wobei die Rastlaschen durch Aufbringen einer Kraft auf ihre Enden in zwei entgegengesetzte Richtungen in Richtung des Profilleistenmaterials verformt werden und beim Befestigen in das Profilleistenmaterial eindringen.

Die Aufgabe der vorliegenden Erfindung ist daher, eine alternative Verbindungsanordnung bereitzustellen, mit der ein T-förmiger Profilschlauch einfacher mit einem Setzgerät oder einem weiteren T-förmigen Profilschlauch verbunden werden kann, insbesondere mit definiertem Toleranzausgleich und präzisierter Positionierung des T-förmigen Profilschlauchs.

### 3. Zusammenfassung der Erfindung

Die obige Aufgabe wird gelöst durch eine Verbindungsanordnung zur Verbindung eines T-förmigen Profilschlauchs aus einem polymeren Material mit einem Setzgerät oder einem weiteren T-förmigen Profilschlauch gemäß dem unabhängigen Patentanspruch 1, ein Setzgerät gemäß dem Patentanspruch 14 sowie ein Verbindungsverfahren für einen T-förmigen Profilschlauch mit einem Setzgerät oder einem weiteren T-förmigen Profilschlauch unter Verwendung der erfindungsgemäßen Verbindungsanordnung gemäß dem unabhängigen Patentanspruch 15. Vorteilhafte Ausführungsformen und Weiterentwicklungen ergeben sich aus der nachfolgenden Beschreibung, den Zeichnungen sowie den anhängigen Patentansprüchen.

Ein erstes Befestigungselement eines T-förmigen Profilschlauchs aus einem polymeren Material in einer erfindungsgemäßen Verbindungsanordnung, wobei das Befestigungselement aus einer einteiligen Blechkonstruktion besteht, weist auf: einen rechteckigen Boden mit einer zentralen Längsachse, der eine erste Oberfläche sowie eine der ersten Oberfläche gegenüberliegende zweite Oberfläche aufweist, und eine Mehrzahl von Verriegelungszähnen, die einseitig über die erste Oberfläche hinausragen und angepasst sind, um bei Verwendung in das polymere Material des T-förmigen Profilschlauchs einzudringen und eine Relativbewegung zwischen Befestigungselement und T-förmigem Profilschlauch in einer Richtung parallel zu der ersten Oberfläche zu verhindern.

Das erste Befestigungselement wird verwendet, um den T-förmigen Profilschlauch aus polymerem Material in der Verbindungsanordnung zu fixieren. Der Begriff T-förmiger Profilschlauch erfordert, dass der Profilschlauch nicht nur im Inneren einen T-Form aufweist, beispielsweise um Fügeelemente mit einem Kopf und einem Schaft, wie Schrauben, Bolzen, Niete und dergleichen, zu transportieren, sondern auch außen im Querschnitt eine T-Form hat. Anders ausgedrückt weist der T-förmige Profilschlauch im Querschnitt nicht nur im Inneren eine T-Form auf, sondern hat auch eine T-förmige Außenkontur. Dies wird auch bei der nachfolgenden Diskussion des erfindungsgemäßen Befestigungselements deutlich.

Der Begriff polymeres Material umfasst polymeres Material aus nachwachsenden Quellen sowie aus nicht-nachwachsenden oder fossilen Quellen. Vorzugsweise handelt es sich bei dem polymeren Material um einen, insbesondere flexiblen, Kunststoff.

Schließlich ist zu berücksichtigen, dass das Befestigungselement aus der einteiligen Blechkonstruktion besteht. Allgemein bezeichnet der Begriff Blech ein Walzwerkerzeugnis aus Metall, das als Tafel ausgeliefert wird und dessen Breite und Länge sehr viel größer als seine Dicke sind. Somit wird durch den Begriff der Blechkonstruktion betont, dass das Befestigungselement aus einem Metall besteht. Weiterhin weist es eine geringe Materialdicke auf. In diesem Zusammenhang ist es besonders bevorzugt, wenn für die einteilige Blechkonstruktion des Befestigungselements ein Feinblech verwendet wird. Denn gerade ein Feinblech zeichnet sich dadurch aus, dass es eine Materialstärke von höchstens 3 mm aufweist.

Nachfolgend wird das Befestigungselement anhand seiner Verwendung in einer erfindungsgemäßen Verbindungsanordnung erläutert. Die Verbindungsanordnung umfasst hierbei ein Basiselement mit einer zentralen Längsachse und einer T-förmigen Aussparung zur Aufnahme des T-förmigen Profilschlauchs. Die T-förmige Aussparung erstreckt sich in Längsrichtung durch das Basiselement und ist an einem Kopfende offen. Ein Boden der Aussparung bildet somit das vom Kopf abgewandte Ende des Schafts der T-Form. In einer Richtung senkrecht zum Boden der Aussparung definieren die angrenzenden Seitenwände der T-förmigen Aussparung zunächst den Schaft der T-Form und anschließend den Kopf der T-Form. Auf der dem Schaft abgewandten Seite des Kopfs ist die T-förmige Aussparung offen, so dass der T-förmige Profilschlauch bei Verwendung von dieser Seite aus in die T-förmige Aussparung einsetzbar ist.

Im Rahmen der Verwendung wird das Befestigungselement somit in der T-förmigen Aussparung des Basiselements der Verbindungsanordnung angeordnet. Insbesondere ist die zweite Oberfläche des rechteckigen Bodens einem Boden der T-förmigen Aussparung zugewandt. Dementsprechend steht die Mehrzahl von Verriegelungszähnen in Richtung des offenen Kopfendes der T-förmigen Aussparung über die erste Oberfläche des Bodens hinaus. Nun wird der T-fönnige Profilschlauch in der Verbindungsanordnung so angeordnet, dass ein Ende des T-förmigen Profilschlauchs bündig mit einer Stirnseite des Basiselements ausgerichtet ist. Im Hinblick auf die spätere Befestigung an einem Setzgerät oder einer weiteren Verbindungsanordnung mit einem weiteren T-förmigen Profilschlauch dient die vordere Kante bzw. das axiale Ende des Profilschlauchs somit als Referenzkante. Aufgrund der Mehrzahl von Verriegelungszähnen wird der Profilschlauch form- und reibschlüssig in Längsrichtung im Basiselement gehalten.

Weiterhin umfasst die Verbindungsanordnung ein Verschlusselement, mit dem die T-förmige Aussparung senkrecht zur Längsachse verschließbar ist. Mit diesem Verschlusselement wird der T-förmige Profilschlauch in der Aussparung fixiert. Dies erfolgt dadurch, dass das Verschlusselement der Verbindungsanordnung an dem Basiselement angebracht wird, beispielsweise festgeschraubt wird. Aufgrund des Befestigungselements schließt der Kopfbereich des T-förmigen Profilschlauchs senkrecht zur zentralen Längsachse nicht bündig mit dem Basiselement ab. Vielmehr steht der T-förmige Profilschlauch über das Basiselement vor. Anders ausgedrückt sorgt das in der T-förmigen Aussparung angeordnete Befestigungselement für ein Untermaß der T-förmigen Aussparung in der Richtung senkrecht zur zentralen Längsachse bzw. in Richtung des offenen Kopfendes der T-förmigen Aussparung.

Wird das Verschlusselement daher am Basiselement befestigt, drückt es den Kopfbereich des T-förmigen Profilschlauchs in Richtung des Bodens der T-förmigen Aussparung, wodurch die Mehrzahl von Verriegelungszähnen in das Material des T-förmigen Profilschlauchs eindringt und diesen fixiert.

Zur Befestigung der Verbindungsanordnung mit dem darin fixierten T-förmigen Profilschlauch an einem Setz- oder Verarbeitungsgerät oder einer weiteren Verbindungsanordnung mit einem darin fixierten weiteren T-förmigen Profilschlauch weist das Basiselement ein Verbindungsmittel auf. Hierbei handelt es sich vorzugsweise um mindestens eine Durchgangsbohrung, besonders bevorzugt um mindestens zwei Durchgangsbohrungen. Die Durchgangsbohrung verläuft dabei parallel zur zentralen Längsachse. Alternativ zu der oder den Durchgangsbohrungen sind als Verbindungsmittel auch Klammern, Schnellspanner, Stifte, Einrastverbinder, Bajonettverschlüsse und dergleichen bevorzugt.

Ein Vorteil dieses Aufbaus ist, dass, wenn der so fixierte T-förmige Profilschlauch an einem Setz- bzw. Verarbeitungsgerät oder einer weiteren Verbindungsanordnung befestigt werden soll, nur noch die Toleranzen in der Materialstärke des T-förmigen Profilschlauchs im Kopfbereich zu berücksichtigen sind, was eine stufenlose Führung der Verbindungselemente im T-förmigen Profilschlauch deutlich vereinfacht. Weiterhin ist ein Bezugspunkt für den Übergang und den Toleranzausgleich zwischen den zu verbindenden Profilschläuchen durch die Referenzkante und das dem Schaftbereich abgewandte Ende des Kopfbereichs des T-förmigen Profilschlauchs automatisch definiert. Zudem handelt es sich um eine kostengünstige Lösung zur Reduzierung der vorhandenen Toleranzen, gerade verglichen mit einem erodierten Endstück eines Profilschlauchs.

Denn ausgehend von den obigen Punkten ist die Montage vereinfacht, da beispielsweise das aufwändige Verkleben der Hülsen mit dem Profilschlauch entfällt. Zudem wurde die Toleranzkette verkürzt, wie oben aufgezeigt, was die Kosten reduziert und eine präzisere Positionierung des T-förmigen Profilschlauchs realisiert.

In einer vorteilhaften Ausführungsform umfasst die Mehrzahl von Verriegelungszähnen mindestens einen ersten Verriegelungszahn und mindestens einen zweiten Verriegelungszahn, die bezogen auf die zentrale Längsachse vorzugsweise spiegelsymmetrisch angeordnet sind. Im Rahmen dieser Ausführungsform ist es besonders bevorzugt, dass die Mehrzahl von Verriegelungszähnen des Befestigungselements eine Mehrzahl erster Verriegelungszähne und eine Mehrzahl zweiter Verriegelungszähne umfasst, wobei die Mehrzahl erster Verriegelungszähne und die Mehrzahl zweiter Verriegelungszähne vorzugsweise parallel zur zentralen Längsachse ausgerichtet sind.

Da bei der Verwendung des Befestigungselements die Aufgabe der Verriegelungszähne darin besteht, den T-förmigen Profilschlauch in Richtung des Verschlusselements zu drücken und in das Material des T-förmigen Profilschlauchs einzudringen, sind hierzu mindestens zwei Verriegelungszähne erforderlich, nämlich ein erster und ein zweiter Verriegelungszahn. Besonders vorteilhaft ist die spiegelsymmetrische Anordnung des ersten und des zweiten Verriegelungszahns, da der T-förmige Profilschlauch auf diese Weise möglichst gleichmäßig in Richtung des Verschlusselements gedrückt werden kann.

Die Verwendung einer Mehrzahl erster Verriegelungszähne und einer Mehrzahl zweiter Verriegelungszähne ermöglichen ein besonders effektives Festhalten des T-förmigen Profilschlauchs und somit das besonders effektive Verhindern der angesprochenen Relativbewegung. Die Mehrzahl erster Verriegelungszähne und/oder die Mehrzahl zweiter Verriegelungszähne kann sich über die gesamte Länge des Bodens des Befestigungselements oder über Teilbereiche davon erstrecken, beispielsweise im Wechsel mit Bereichen ohne Verriegelungszähne. Gerade mit einer Mehrzahl erster und zweiter Verriegelungszähne sowie bei einer spiegelsymmetrischen Anordnung derselben ist ein besonders wirksames Verhindern der Relativbewegung möglich und der T-förmige Profilschlauch wird im Rahmen der Fixierung über einen größeren Bereich gegen das Verschlusselement gedrückt.

In einer weiteren vorteilhaften Ausführungsform erstrecken sich von dem Boden zwei Seitenwände, die parallel und spiegelsymmetrisch zur zentralen Längsachse angeordnet sind, wobei die Mehrzahl von Verriegelungszähnen an einem vom Boden abgewandten Ende der Seitenwände angeordnet ist. Besonders vorteilhaft begrenzen in dieser Ausführungsform die Seitenwände den Boden seitlich und eine Vielzahl an Öffnungen ist in einem Übergangsbereich zwischen Boden und der jeweiligen Seitenwand vorhanden.

Mit dieser Ausführungsform können die Verriegelungszähne besonders effektiv benachbart zum Kopfbereich des T-förmigen Profilschlauchs bei Verwendung angreifen. Daher sind die Seitenwände vorzugsweise so dimensioniert, dass die Mehrzahl von Verriegelungszähnen über den Schaftbereich der T-förmigen Aussparung im Basiselement der Verbindungsanordnung hervorstehen. Anders ausgedrückt, und bezogen auf den T-förmigen Profilschlauch, weist die Seitenwand eine Erstreckung senkrecht zur zentralen Längsachse auf, die ungefähr der Länge des Schaftbereichs des T-förmigen Profilschlauchs bezogen auf die Außenkontur entspricht. Dies realisiert ein besonders effektives Fixieren des T-förmigen Profilschlauchs in der Verbindungsanordnung.

Die Öffnungen in dem Übergangsbereich zwischen Boden und jeweiliger Seitenwand sorgen für eine erleichterte Biegung der Seitenwände, nachdem das Befestigungselement im Rohzustand hergestellt wurde. Dies wird später im Rahmen der Herstellung des Befestigungselements verdeutlicht.

Im Hinblick auf die Ausführungsform mit den Seitenwänden ist es weiterhin bevorzugt, dass in jeder der Seitenwände mindestens eine U-förmige Aussparung vorhanden ist, so dass eine Lasche bereitgestellt ist, die in eine Richtung weg von der zentralen Längsachse vorsteht und einseitig mit der Seitenwand verbunden ist, wobei das offene Ende der U-förmigen Aussparung vorzugsweise in Richtung des vom Boden abgewandten Endes der jeweiligen Seitenwand weist. Die U-förmige Aussparung in den Seitenwänden ist besonders vorteilhaft, wenn die Seitenwände den Boden des Befestigungselements seitlich begrenzen. Bei Verwendung liegen dann die Seitenwände des Befestigungselements direkt an den Seitenwänden der T-förmigen Aussparung im Basiselement der Verbindungsanordnung an. Die im Befestigungselement gebildeten Laschen können nach außen gebogen werden, was ein Vorhandensein einer entsprechenden Vertiefung in der jeweiligen Seitenwand der T-förmigen Aussparung des Basiselements der Verbindungsanordnung voraussetzt. Somit wird das Befestigungselement in der Verbindungsanordnung bzw. in dem Basiselement der Verbindungsanordnung gegen eine Relativbewegung gesichert, insbesondere in Längsrichtung.

In einer weiteren bevorzugten Ausführungsform weist der Boden mindestens ein Durchgangsloch, vorzugsweise zwei Durchgangslöcher, auf, vorzugsweise auf der zentralen Längsachse, und/oder der Boden weist mindestens eine Lasche auf, die einseitig über die zweite Oberfläche hinausragt. Beide Alternativen stellen eine Fixierung des Befestigungselements in der T-förmigen Aussparung des Basiselements der Verbindungsanordnung bereit. Auch auf diese Weise ist das Befestigungselement gegen eine Relativbewegung zum Basiselement gesichert.

Ein zweites Befestigungselement eines T-förmigen Profilschlauchs aus einem polymeren Material in einer erfindungsgemäßen Verbindungsanordnung, wobei das Befestigungselement aus einer einteiligen Blechkonstruktion besteht, umfasst: eine rechteckige Grundfläche mit einer zentralen Längsachse, die eine erste Oberfläche sowie eine der ersten Oberfläche gegenüberliegende zweite Oberfläche aufweist, eine Ebene definiert, die die zentrale Längsachse enthält, und ein Befestigungsmittel zur Befestigung des Befestigungselements in der Verbindungsanordnung aufweist, und eine Mehrzahl von Verriegelungszähnen, die in der durch die rechteckige Grundfläche definierten Ebene in einer ersten Richtung angeordnet und angepasst sind, um bei Verwendung in das polymere Material des T-förmigen Profilschlauchs einzudringen und eine Relativbewegung zwischen Befestigungselement und T-förmigem Profilschlauch in einer Richtung parallel zu der zentralen Längsachse zu verhindern, wobei die erste Richtung senkrecht zur zentralen Längsachse ausgerichtet ist. Das zweite Befestigungselement unterscheidet sich von dem oben beschriebenen ersten Befestigungselement dadurch, dass es keinen Boden aufweist. Die resultierende Funktion ist jedoch gleich zu der oben für das erste Befestigungselement beschriebenen Funktion, so dass auf die entsprechenden Ausführungen verwiesen wird, um Wiederholungen zu vermeiden. Dies gilt auch im Hinblick auf die Materialwahl für das Befestigungselement und die Materialdicke. Zudem ist es erfindungsgemäß, dass zwei dieser Befestigungselemente an gegenüberliegenden Seiten in der T-förmigen Aussparung angeordnet sind.

In einer bevorzugten Ausführungsform umfasst das Befestigungselement als Befestigungsmittel mindestens eine U-förmige Aussparung, so dass eine Lasche bereitgestellt ist, die in eine Richtung aus der durch die Grundfläche definierten Ebene hinaus vorsteht und einseitig mit der rechteckigen Grundfläche verbunden ist, wobei das offene Ende der U-förmigen Aussparung vorzugsweise in die erste Richtung weist, und/oder eine Bohrung. Auf diese Weise kann das Befestigungselement besonders effektiv gegen eine Relativbewegung entlang der zentralen Längsachse in der Verbindungsanordnung befestigt werden, insbesondere in der T-förmigen Aussparung im Basiselement.

Eine erfindungsgemäße Verbindungsanordnung zur Verbindung eines T-förmigen Profilschlauchs aus einem polymeren Material mit einem Setzgerät oder einem weiteren T-förmigen Profilschlauch umfasst ein Basiselement mit einer zentralen Längsachse, das ein Verbindungsmittel aufweist, um das Basiselement an dem Setzgerät oder einer weiteren Verbindungsanordnung eines weiteren T-förmigen Profilschlauchs zu befestigen, und das Basiselement umfasst eine T-förmige Aussparung zur Aufnahme des T-förmigen Profilschlauchs, die sich in Längsrichtung durch das Basiselement erstreckt und an einem Kopfende offen ist, ein Verschlusselement, mit dem die T-förmige Aussparung senkrecht zur Längsachse verschließbar ist, sowie das erste Befestigungselement, das in der T-förmigen Aussparung angeordnet ist, insbesondere benachbart zu einem Boden der T-förmigen Aussparung, oder zwei der zweiten Befestigungselemente, die an gegenüberliegenden Seiten in der T-förmigen Aussparung angeordnet sind, oder die T-förmige Aussparung weist eine Mehrzahl integral damit ausgebildeter Verriegelungszähne auf, die insbesondere von einer durch die T-förmige Aussparung gebildeten Stufe in Richtung des Verschlusselements vorstehen und parallel zu einer zentralen Längsachse des Basiselements angeordnet sind. Die erfindungsgemäße Verbindungsanordnung verwendet das erste oder das zweite Befestigungselement. Im Hinblick auf die technischen Effekte wird daher auf die obigen Ausführungen zu den Befestigungselementen verwiesen, um Wiederholungen zu vermeiden. Alternativ weist das Basiselement der Verbindungsanordnung selbst die Mehrzahl von Verriegelungszähnen auf, wodurch die Befestigung des Befestigungselements in dem Basiselement entfallen kann. Allerdings ist in diesem Fall die Herstellung des Basiselements aufwändiger. Die Funktionsweise im Betrieb gleicht jedoch der Funktion bei Verwendung des Befestigungselements.

Bei dem Verbindungsmittel handelt es sich vorzugsweise um mindestens eine Durchgangsbohrung, die im Basiselement parallel zur Längsachse verläuft, besonders bevorzugt um mindestens zwei Durchgangsbohrungen. Alternativ zu der oder den Durchgangsbohrungen sind als Verbindungsmittel auch Klammern, Schnellspanner, Stifte, Einrastverbinder, Bajonettverschlüsse und dergleichen bevorzugt.

In einer bevorzugten Ausführungsform der Verbindungsanordnung mit einem der Befestigungselemente sind die zentrale Längsachse des Befestigungselements und die zentrale Längsachse des Basiselements parallel zueinander ausgerichtet. Aufgrund dieser Ausrichtung verläuft auch die Mehrzahl von Verriegelungszähnen, insbesondere bei Verwendung einer Mehrzahl erster und einer Mehrzahl zweiter Verriegelungszähne parallel zur zentralen Längsachse und ermöglicht eine besonders vorteilhafte Fixierung des T-förmigen Profilschlauchs in der Verbindungsanordnung, wie oben diskutiert.

Vorteilhafterweise ist das entsprechende Befestigungselement mit dem Boden und/oder den Seitenwänden der T-förmigen Aussparung im Basiselement der Verbindungsanordnung derart verbunden ist, dass es gegen eine Relativbewegung zum Basiselement entlang der zentralen Längsachse gesichert ist, insbesondere mittels einer formschlüssigen Verbindung, besonders bevorzugt mittels Verschrauben oder Verstiften. Die Verbindung zwischen Befestigungselement und Boden und/oder Seitenwand der T-förmigen Aussparung kann über das Durchgangsloch bzw. die Durchgangslöcher im Boden des Befestigungselements und/oder durch die mindestens eine Lasche erfolgen, die in eine entsprechende Vertiefung im Boden des Basiselements eingreift. Alternativ, und insbesondere auf das zweite erfindungsgemäße Befestigungselement bezogen, kann die Verbindung über das Befestigungsmittel mit der Seitenwand der T-förmigen Aussparung erfolgen. Hierdurch wird, wie oben diskutiert, das Befestigungselement gegen eine Relativbewegung in der T-förmigen Aussparung des Basiselements der Verbindungsanordnung entlang der zentralen Längsachse gesichert. Ein Verschrauben stellt zusätzlich eine Fixierung senkrecht zur zentralen Längsachse und insbesondere senkrecht zum Boden der T-förmigen Aussparung im Basiselement bereit.

Vorzugsweise weist die T-förmige Aussparung im Basiselement der Verbindungsanordnung an den Seitenwänden Vertiefungen auf, um das Befestigungselement in der T-förmigen Aussparung gegen eine Relativbewegung zum Basiselement entlang der zentralen Längsachse zu sichern. Die Vertiefungen an den Seitenwänden der T-förmigen Aussparung im Basiselement wurden oben in Zusammenhang mit den in den Seitenwänden des Befestigungselements gebildeten Laschen diskutiert. Somit realisiert diese Ausgestaltung eine weitere Sicherung gegen eine Relativbewegung zwischen Befestigungselement und Basiselement.

Ebenso ist es bevorzugt, dass in der T-förmigen Aussparung ein T-förmiger Profilschlauch angeordnet ist und eine zentrale Längsachse des T-förmigen Profilschlauchs sowie die zentrale Längsachse des Basiselements in der Verbindungsanordnung parallel zueinander ausgerichtet sind. Somit sind alle zentralen Längsachsen, d.h. die des Befestigungselements, die des Basiselements und die des T-förmigen Profilschlauchs, parallel zueinander ausgerichtet. Die Mehrzahl Verriegelungszähne verläuft daher vorzugsweise ebenfalls parallel zur zentralen Längsachse und verhindert auf diese Weise besonders effektiv eine Relativbewegung zwischen Befestigungselement und T-förmigem Profilschlauch entlang der zentralen Längsachse.

**In** einer weiteren Ausführungsform der Verbindungsanordnung besteht das Basiselement und/oder das Verschlusselement aus Aluminium oder Stahl. Bei der Herstellung der Verbindungsanordnung aus Aluminium oder Stahl können die geforderten Toleranzen besonders effektiv realisiert werden, gerade im Vergleich zur Herstellung aus einem Kunststoff.

Ein erfindungsgemäßes Setzgerät ist mit einem T-förmigen Profilschlauch aus einem polymeren Material mittels der erfindungsgemäßen Verbindungsanordnung verbunden. Das erfindungsgemäße Setzgerät verwendet/steht mit der erfindungsgemäßen Verbindungsanordnung in Verbindung. Daher wird zur Vermeidung von Wiederholungen ebenfalls auf die obigen Ausführungen sowohl zum erfindungsgemäßen Befestigungselement wie auch zu erfindungsgemäßen Verbindungsanordnung verwiesen.

Ein beispielhaftes Herstellungsverfahren des Befestigungselements umfasst die folgenden Schritte: Bereitstellen eines Blechmaterials, Bearbeiten des Blechmaterials, insbesondere mittels Ätzen, so dass das Befestigungselement in einem Rohzustand vorliegt, anschließend Biegen der Bereiche des Befestigungselements mit der Mehrzahl von Verriegelungszähnen, so dass diese einseitig über die erste Oberfläche hinausragen. Mit dem Herstellungsverfahren wird das Befestigungselement hergestellt. Aufgrund des bevorzugten Ätzens aus dem bereitgestellten Blech kann das Befestigungselement besonders kostengünstig hergestellt werden. Zudem können im Übergangsbereich zwischen Boden und Seitenwänden bei der entsprechenden Ausführungsform eine Vielzahl von Öffnungen eingebracht werden, um das spätere Biegen der Seitenwände bezogen auf den Boden zu erleichtern. Im Hinblick auf die Ausgestaltung des Befestigungselements ohne Boden, d.h. die zweite Alternative des Befestigungselements, weist das entsprechendes Herstellungsverfahren die Schritte auf: Bereitstellen eines Blechmaterials und Bearbeiten des Blechmaterials, insbesondere mittels Ätzen, so dass das Befestigungselement vorliegt. Im Vergleich zu der ersten Ausgestaltung ist somit kein Biegen der Bereiche des Befestigungselements mit der Mehrzahl von Verriegelungszähnen erforderlich.

Der Vollständigkeit halber und bezogen auf die Ausgestaltung des Basiselements der Verbindungsanordnung mit der Mehrzahl von Verriegelungszähnen weist ein entsprechendes Herstellungsverfahren die Schritte auf: Bereitstellen eines Basiselements mit einer zentralen Längsachse, wobei das Basiselement eine T-förmige Aussparung zur Aufnahme des T-förmigen Profilschlauchs umfasst, die sich in Längsrichtung durch das Basiselement erstreckt und an einem Kopfende offen ist, Einbringen, insbesondere mittels Fräsen, einer Mehrzahl von Verriegelungszähnen im Bereich einer Stufe der T-förmigen Aussparung sowie Abtragen von Material im Bereich der Stufe der T-förmigen Aussparung, so dass die Mehrzahl von Verriegelungszähnen über die Stufe hervorsteht. Das Abtragen des Materials kann ebenfalls mittels Fräsen erfolgen. Vorteilhafterweise wird das Basiselement im Rahmen des Herstellungsverfahrens ebenfalls mit einem Verbindungsmittel versehen, um das Basiselement an einem Setzgerät oder einer weiteren Verbindungsanordnung eines weiteren T-förmigen Profilschlauchs befestigen zu können. Hierbei handelt es sich vorzugsweise um mindestens eine Durchgangsbohrung, besonders bevorzugt um mindestens zwei Durchgangsbohrungen. Die Durchgangsbohrung verläuft dabei parallel zur zentralen Längsachse. Alternativ zu der oder den Durchgangsbohrungen sind als Verbindungsmittel auch Klammern, Schnellspanner, Stifte, Einrastverbinder, Bajonettverschlüsse und dergleichen bevorzugt.

Ein erfindungsgemäßes Verbindungsverfahren für einen T-förmigen Profilschlauch mit einem Setzgerät oder einem weiteren T-förmigen Profilschlauch unter Verwendung der erfindungsgemäßen Verbindungsanordnung umfasst die Schritte: Bereitstellen des T-förmigen Profilschlauchs sowie der erfindungsgemäßen Verbindungsanordnung und Anordnen des Befestigungselements in der T-förmigen Aussparung im Basiselement der Verbindungsanordnung oder Bereitstellen des T-förmigen Profilschlauchs sowie der erfindungsgemäßen Verbindungsanordnung mit der Mehrzahl Verriegelungszähne, die integral mit der T-förmigen Aussparung ausgebildet sind, danach Anordnen des T-förmigen Profilschlauchs in der Verbindungsanordnung so, dass ein Ende des T-förmigen Profilschlauchs bündig mit einer Stirnseite des Basiselements ausgerichtet ist, Fixieren des T-förmigen Profilschlauchs in der T-förmigen Aussparung durch Anbringen des Verschlusselements der Verbindungsanordnung an dem Basiselement, wodurch die Mehrzahl von Verriegelungszähnen in den T-förmigen Profilschlauch eindringt, vorzugsweise benachbart zu einer Unterseite des Kopfs des T-förmigen Profilschlauchs, und danach Verbinden des fixierten T-förmigen Profilschlauchs mit dem Setzgerät oder einem weiteren T-förmigen Profilschlauch, insbesondere einem weiteren in einer erfindungsgemäßen Verbindungsanordnung fixierten T-förmigen Profilschlauch. Das erfindungsgemäße Verbindungsverfahren verwendet die erfindungsgemäße Verbindungsanordnung und wurde oben bereits im Zusammenhang mit dem Befestigungselement sowie der erfindungsgemäßen Verbindungsanordnung diskutiert. Daher wird auf die entsprechenden Ausführungen verwiesen.

### 4. Kurzzusammenfassung der Zeichnungen

Nachfolgend wird die vorliegende Erfindung unter Bezugnahme auf die Zeichnungen detailliert beschrieben. Gleiche Bezugszeichen in den Zeichnungen bezeichnen dabei gleiche Bauteile und/oder Elemente. Es zeigen:
- Figur 1: eine Seitenansicht einer Ausführungsform der erfindungsgemäßen Verbindungsanordnung mit einer ersten Ausführungsform gemäß der ersten Alternative des Befestigungselements,
- Figur 2: eine perspektivische Ansicht der Verbindungsanordnung gemäß Figur 1, wobei lediglich Umrisse der Bestandteile der Verbindungsanordnung dargestellt sind,
- Figur 3: eine perspektivische Ansicht der ersten Ausführungsform des Befestigungselements,
- Figur 4: eine Draufsicht auf das Befestigungselement gemäß Figur 3 im Rohzustand, d. h. nach Bearbeitung des Blechmaterials jedoch vor dem Biegen,
- Figur 5: eine schematische Seitenansicht der ersten Ausführungsform des Befestigungselements bei Verwendung mit einem T-förmigen Profilschlauch,
- Figur 6: eine perspektivische Ansicht einer zweiten Ausführungsform der ersten Alternative des Befestigungselements,
- Figur 7: eine perspektivische Ansicht einer Ausführungsform der erfindungsgemäßen Verbindungsanordnung mit der zweiten Ausführungsform der ersten Alternative des Befestigungselements, wobei lediglich Umrisse der Bestandteile der Verbindungsanordnung dargestellt sind,
- Figur 8: eine perspektivische Ansicht einer Ausführungsform gemäß der zweiten Alternative des Befestigungselements,
- Figur 9: eine perspektivische Ansicht der Verbindungsanordnung gemäß Figur 1 mit dem Befestigungselement gemäß Figur 8, wobei lediglich Umrisse der Bestandteile der Verbindungsanordnung dargestellt sind,
- Figur 10: ein perspektivische Teilschnittansicht einer alternativen Ausgestaltung des Basiselements der Verbindungsanordnung,
- Figur 11: eine perspektivische Ansicht eines Setzgeräts mit der Verbindungsanordnung,
- Figur 12: ein schematischer Verfahrensablauf einer Ausführungsform eines beispielhaften Herstellungsverfahrens und
- Figur 13: ein schematischer Verfahrensablauf einer Ausführungsform eines erfindungsgemäßen Verbindungsverfahrens.

### 5. Detaillierte Beschreibung der bevorzugten Ausführungsformen

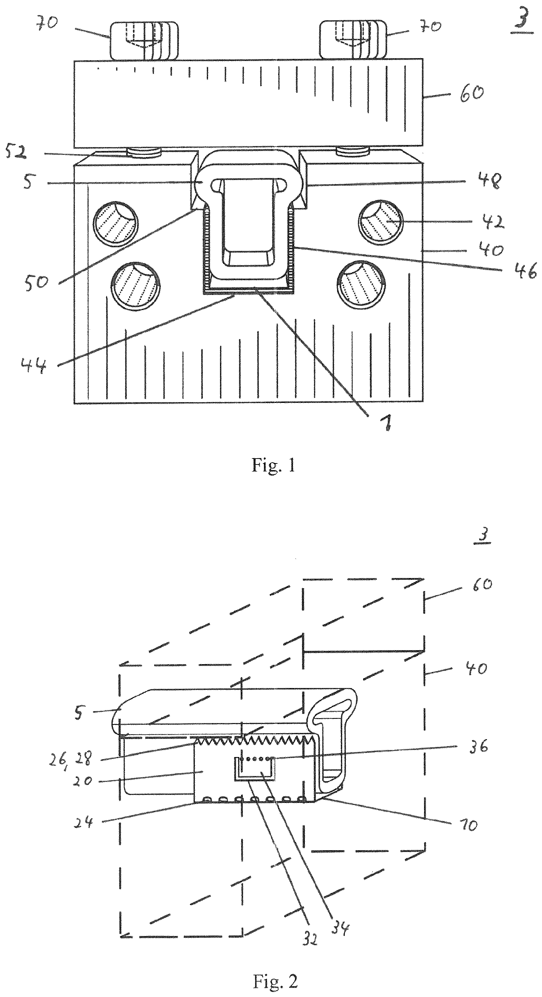

Zunächst wird unter Bezugnahme auf die Figuren 1 bis 5 eine erste Ausführungsform eines Befestigungselements 1 diskutiert. Die Figuren 1, 2 und 5 illustrieren dabei die Verwendung des Befestigungselements 1 in Verbindung mit einem T-förmigen Profilschlauch 5 aus einem polymeren Material sowie im Rahmen einer Verbindungsanordnung 3.

Der Begriff T-förmiger Profilschlauch 5 erfordert, dass der Profilschlauch 5 nicht nur im Inneren einen T-Form aufweist, beispielsweise um Fügeelemente mit einem Kopf und einem Schaft, wie Schrauben, Bolzen, Niete und dergleichen, zu transportieren, sondern auch außen im Querschnitt eine T-Form hat. Anders ausgedrückt weist der T-förmige Profilschlauch 5 im Querschnitt nicht nur im Inneren eine T-Form auf, sondern hat auch eine T-förmige Außenkontur.

Der Begriff polymeres Material umfasst polymeres Material aus nachwachsenden Quellen sowie aus nicht-nachwachsenden oder fossilen Quellen. Vorzugsweise handelt es sich bei dem polymeren Material um einen, insbesondere flexiblen, Kunststoff.

Die Verbindungsanordnung 3 umfasst gemäß Figur 1 ein Basiselement 40. Dieses ist quaderförmig ausgebildet. Weiterhin weist das Basiselement 40 eine T-förmige Aussparung 44 zur Aufnahme des T-förmigen Profilschlauchs 5 auf. Die T-förmige Aussparung 44 erstreckt sich entlang einer zentralen Längsachse des Basiselements 40 durch das Basiselement 40. Ein Boden der T-förmigen Aussparung 44 bildet das vom Kopf abgewandte Ende des Schafts der T-Form. In bekannter Weise umfasst die T-Form daher einen Schaftbereich 46 und einen Kopfbereich 48, die durch die Stufe 50 voneinander getrennt sind. Der Schaftbereich 46 weist eine geringere Erstreckung quer zur Längsachse im Vergleich zum Kopfbereich 48 auf. Idealerweise ist die T-förmige Aussparung 44 von der Größe her an den aufzunehmenden T-förmigen Profilschlauch 5 angepasst. Die T-förmige Aussparung 44 ist an einem Kopfende, d. h. benachbart zu dem Kopfbereich 48 an dem dem Schaftbereich 46 gegenüberliegenden Ende offen ausgebildet. Somit kann bei Verwendung der T-förmige Profilschlauch 5 von dieser Seite aus in die T-förmige Aussparung 44 eingesetzt werden.

Bei Verwendung wird zunächst das Befestigungselement 1 in die T-förmige Aussparung 44 des Basiselements 40 der Verbindungsanordnung 3 angeordnet. Aus diesem Grund wird zunächst der Aufbau des Befestigungselements 1 sowie dessen Herstellung erläutert. Das Befestigungselement 1 ist aus einer einteiligen Blechkonstruktion gebildet. Allgemein bezeichnet der Begriff Blech ein Walzwerkerzeugnis aus Metall, das als Tafel ausgeliefert wird und dessen Breite und Länge sehr viel größer als seine Dicke sind. Somit wird durch den Begriff der Blechkonstruktion betont, dass das Befestigungselement 1 aus einem Metall besteht. Weiterhin weist es eine geringe Materialdicke auf. In diesem Zusammenhang ist es besonders bevorzugt, wenn für die einteilige Blechkonstruktion des Befestigungselements 1 ein Feinblech verwendet wird. Denn gerade ein Feinblech zeichnet sich dadurch aus, dass es eine Materialstärke von höchstens 3 mm aufweist.

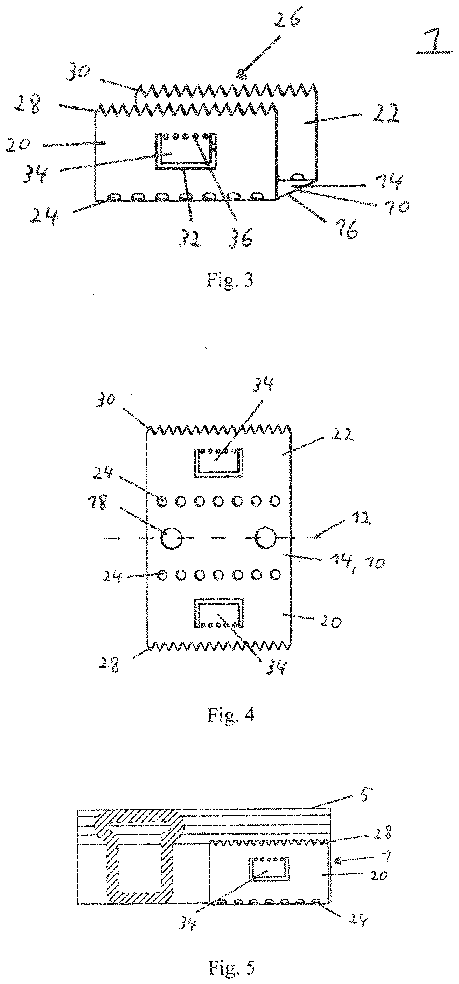

Im Rahmen der Herstellung des Befestigungselements 1 wird daher zunächst das Blech bereitgestellt und anschließend so bearbeitet, dass das Befestigungselement 1 in einem Rohzustand vorliegt. Dieser Rohzustand ist in Figur 4 gezeigt. Die Bearbeitung erfolgt beispielsweise mittels Ätzen, insbesondere Laserätzen.

Wie in Figur 4 erkennbar ist, ist das Befestigungselement 1 im Rohzustand in einer Ebene angeordnet. Erkennbar ist hierbei ein Boden 10 sowie die zentrale Längsachse 12. Weiterhin ist eine erste Oberfläche 14 des Bodens 10 erkennbar. An den Boden 10 grenzen eine erste Seitenwand 20 sowie eine zweite Seitenwand 22 an, die der ersten Seitenwand 20 gegenüberliegt. Weiterhin weist der Boden 10 zwei Durchgangslöcher 18 auf.

Im Übergangsbereich zwischen Boden 10 und erster 20 bzw. zweiter Seitenwand 22 ist eine Mehrzahl an Öffnungen 24 vorgesehen. Diese dienen dem leichteren Biegen der Seitenwände, sodass die Form gemäß Figur 3 resultiert. Im Rahmen dieser Ausgestaltung schließen die Seitenwände mit dem Boden vorzugsweise einen senkrechten Winkel ein, wobei dies nicht zwingend erforderlich ist.

Am vom Boden 10 abgewandten Ende jeder Seitenwand 20, 22 ist eine Mehrzahl von Verriegelungszähnen 26 vorgesehen. Somit weist die erste Seitenwand 20 eine erste Mehrzahl Verriegelungszähne 28 und die zweite Seitenwand 22 eine zweite Mehrzahl Verriegelungszähne 30 auf.

Weiterhin umfasst jede Seitenwand eine U-förmige Aussparung 32, die eine Lasche 34 in der Seitenwand bildet. Die Lasche 34 ist somit einseitig mit der jeweiligen Seitenwand 22, 20 verbunden, vorzugsweise an einem der Mehrzahl von Verriegelungszähnen 26 zugewandten Ende. Da bei Verwendung die Lasche 34 ebenfalls bezogen auf die Seitenwände 20, 22 gebogen werden soll, ist auch hier eine Mehrzahl von Öffnungen 36 im Übergangsbereich zwischen Lasche 34 und erster 20 bzw. zweiter Seitenwand 22 vorhanden.

Nun wieder bezugnehmend auf Figur 1 wird in einem ersten Schritt das Befestigungselement 1 in die T-förmige Aussparung 44 eingesetzt. Hierbei ist die zweite Oberfläche 16 des Bodens 10 einem Boden der T-förmigen Aussparung 44 zugewandt. Somit steht die Mehrzahl von Verriegelungszähnen 26 in Richtung des offenen Kopfendes der T-förmigen Aussparung 44 über die erste Oberfläche 14 des Bodens 10 hinaus. In der dargestellten Ausführungsform erstreckt sich insbesondere die Mehrzahl von Verriegelungszähnen 26 über die Stufe 50 hinaus. Durch die Dimensionierung des Befestigungselements 1 resultiert somit ein leichtes Untermaß für den Profilschlauch 5 in der T-förmigen Aussparung 44.

Nun wird der T-förmige Profilschlauch 5 in der Verbindungsanordnung 3 so angeordnet, dass ein Ende des T-förmigen Profilschlauchs 5 bündig mit einer Stirnseite des Basiselements 40 ausgerichtet ist. Im dargestellten Beispiel handelt es sich um die gezeigte Stirnseite. Die vordere Kante des T-förmigen Profilschlauchs 5 dient somit als Referenzkante. Aufgrund der Mehrzahl von Verriegelungszähnen 26 wird der Profilschlauch so in der T-förmigen Aussparung 44 angeordnet, dass er nicht bündig mit der Oberseite des Basiselements 40 abschließt. Die Oberseite bezeichnet hierbei die Seite, an der die T-förmige Aussparung 44 offen ist.

Um den T-förmigen Profilschlauch 5 in der Verbindungsanordnung 3 bzw. dem Basiselement 40 zu fixieren, umfasst die Verbindungsanordnung 3 weiterhin ein Verschlusselement 60. Dieses ist von der Form her an die Oberseite des Basiselements 40 angepasst und deckt die T-förmige Aussparung 44 ab. Eine Fixierung des Verschlusselements 60 erfolgt mittels Schrauben 70, die in entsprechende Bohrungen 52 an der Oberseite des Basiselements 40 geschraubt werden. Hierdurch wird der T-förmige Profilschlauch 5 in die T-förmige Aussparung 44 gedrückt, sodass sich die Mehrzahl von Verriegelungszähnen 26 in das polymere Material des T-förmigen Profilschlauchs 5 gräbt bzw. darin eindringt. Sobald das Verschlusselement 60 mit dem Basiselement 40 verschraubt und die T-förmige Aussparung 44 umlaufend geschlossen ist, drücken sich die Mehrzahl von Verriegelungszähnen 26 elastisch und/oder plastisch in das Material des T-förmigen Profilschlauches 5, sodass dieser kopfseitig an dem Verschlusselement 60 anliegt.

Auf diese Weise ist der T-förmige Profilschlauch 5 in zentraler Längsrichtung gegen eine Relativbewegung bezogen auf das Befestigungselement 1 gesichert. Um eine Bewegung des Profilschlauchs 5 zusammen mit dem Befestigungselement 1 zu verhindern, ist das Befestigungselement 1 vorzugsweise über die Durchgangslöcher 18 mit dem Boden der T-förmigen Aussparung 44 verbunden. Dies kann mittels Verschrauben oder Verstiften erfolgen. Alternativ zu den Durchgangslöchern 18 kann auch eine Lasche vorgesehen sein, die über die zweite Oberfläche 16 des Bodens 10 hinausragt und in eine entsprechende Vertiefung in der T-förmigen Aussparung 44, insbesondere im Boden der T-förmigen Aussparung 44, eingreift.

Alternativ oder ergänzend hierzu können die Laschen 34 ebenfalls zu einer Fixierung des Befestigungselements 1 in Längsrichtung in der T-förmigen Aussparung 44 beitragen. Hierzu werden die Laschen 34 nach außen gebogen, sodass sie in entsprechende Vertiefungen in der Seitenwand im Schaftbereich 46 der T-förmigen Aussparung 44 eingreifen können.

Die auf diese Weise bereitgestellte Verbindungsanordnung 3 kann nun mit einem Setzgerät oder einer weiteren Verbindungsanordnung mit darin fixiertem T-förmigen Profilschlauch 5 befestigt werden. Eine entsprechende Befestigung erfolgt mittels der im Basiselement 40 bereitgestellten Durchgangsbohrungen 42 als Verbindungsmittel. In der dargestellten Ausführungsform umfasst das Basiselement 40 vier Durchgangsbohrungen 42 als Verbindungsmittel. Alternativ zu den Durchgangsbohrungen 42 sind als Verbindungsmittel auch Klammern, Schnellspanner, Stifte, Einrastverbinder, Bajonettverschlüsse und dergleichen bevorzugt.

Das Basiselement 40 und/oder das Verschlusselement 60 besteht aus Aluminium oder Stahl. Bei der Herstellung der Verbindungsanordnung 3 aus Aluminium oder Stahl können insbesondere die geforderten Toleranzen effektiv realisiert werden, gerade im Vergleich zur Herstellung aus einem Kunststoff.

Zusammenfassend werden Bewegungen des T-förmigen Profilschlauchs 5 verhindert, da sich die Mehrzahl von Verriegelungszähnen 26 in das polymere Material des T-förmige Profilschlauchs 5 einformt. Hierzu muss das Befestigungselement 1 kraft- und/oder formschlüssig im Basiselement 40 gehalten werden. Zusätzlich bewirkt die Mehrzahl von Verriegelungszähnen 26 mit ihrer spitz zulaufenden Form in Kombination mit dem elastischen Material des T-förmigen Profilschlauchs 5 einen federnden Effekt, was insbesondere bei beweglichen Verarbeitungsgeräten oder Setzgeräten vorteilhaft ist.

Figur 5 verdeutlicht das Zusammenwirken bzw. die Anordnung des Profilschlauchs 5 im Befestigungselement 1, wobei in der linken Hälfte der Abbildung eine Draufsicht auf den Querschnitt des Profilschlauchs zur besseren Nachvollziehbarkeit der eingezeichneten Konturlinien vorhanden ist.

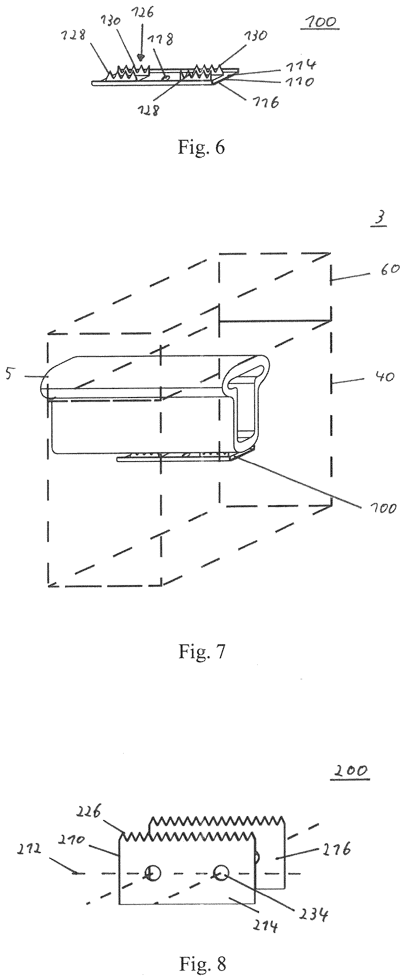

Ein zweite Ausführungsform des Befestigungselements 100 ist in den Figuren 6 und 7 gezeigt. Dieses Befestigungselement 100 unterscheidet sich von der ersten Ausführungsform des Befestigungselements 1 dadurch, dass die Mehrzahl von Verriegelungszähnen 126 ohne Seitenwände am Boden 10 angeordnet ist. Im Übrigen entspricht der Aufbau dem vorher diskutierten Aufbau.

Somit weist auch dieses Befestigungselement 100 einen Boden 110 mit einer ersten 114 und einer zweiten Oberfläche 116 auf. Die Mehrzahl von Verriegelungszähnen 126 ragt über die erste Oberfläche 114 hinaus, wobei eine erste Mehrzahl 128 und eine zweite Mehrzahl von Verriegelungszähnen 130 vorgesehen ist. Im Unterscheid zur ersten Ausführungsform des Befestigungselements 1 erstreckt sich die Mehrzahl erster Verriegelungszähne 128 und die Mehrzahl zweiter Verriegelungszähne 130 nicht über die gesamte Länge des Befestigungselements, sondern über Teilbereiche davon. Insbesondere sind die erste und die zweite Mehrzahl von Verriegelungszähnen 128, 130 im Wechsel mit Bereichen ohne Verriegelungszähne vorhanden. Mittig im Boden 110 des Befestigungselements 100 ist ein Durchgangsloch 118 zur Befestigung des Befestigungselements 100 in der T-förmigen Aussparung 44 im Basiselement 40 vorgesehen.

Aufgrund der anderen Anordnung der Mehrzahl von Verriegelungszähnen 126 greifen diese bei Verwendung nicht benachbart zum Kopfbereich des T-förmigen Profilschlauchs 5 in das polymere Material ein, sondern dringen vielmehr benachbart zu einem unteren Ende des T-förmigen Profilschlauchs 5 in diesen ein. Dies ist beispielsweise aus Figur 7 ersichtlich. In dieser Ausführungsform wird der T-förmige Profilschlauch 5 daher nicht so weit aus der T-förmigen Aussparung 44 im Basiselement 40 herausgehoben, sodass die Fixierung in Längsrichtung weniger stark ausfällt im Vergleich zur ersten Ausführungsform.

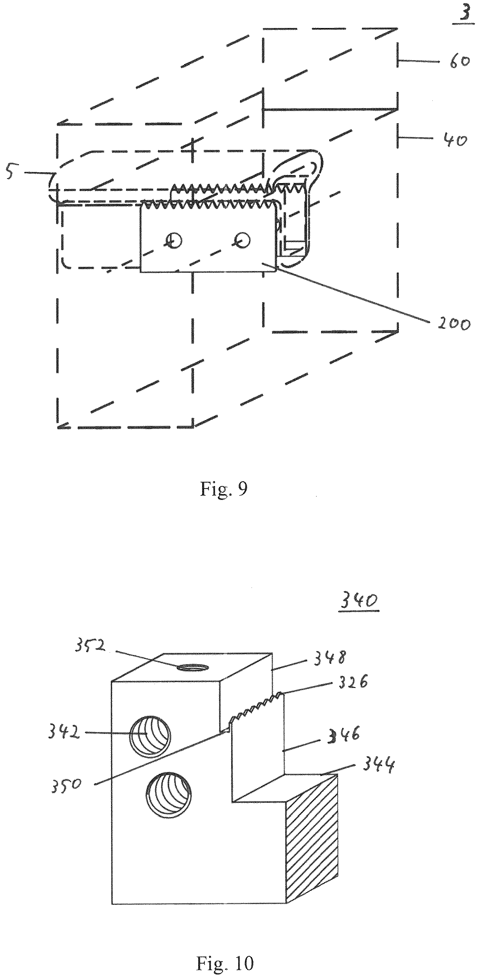

Bezugnehmend auf die Figuren 8 und 9 wird eine Ausführungsform einer zweiten Alternative des Befestigungselements 200 erläutert. Diese besteht ebenfalls aus einer einteiligen Blechkonstruktion und umfasst eine rechteckige Grundfläche 210 mit einer zentralen Längsachse 212, die eine erste Oberfläche 214 sowie eine der ersten Oberfläche 214 gegenüberliegende zweite Oberfläche 216 aufweist. Die Grundfläche 210 definiert eine Ebene, die die zentrale Längsachse 212 enthält. Weiterhin ist ein Befestigungsmittel zur Befestigung des Befestigungselements 200 in der Verbindungsanordnung 3 vorgesehen. In der dargestellten Ausführungsform handelt es sich hierbei um zwei Bohrungen 234. Auf diese Weise ist das Befestigungselement 200 an einer Seitenwand in der T-förmigen Aussparung 44 des Basiselements 40 befestigbar.

Weiterhin weist das Befestigungselement 200 eine Mehrzahl von Verriegelungszähnen 226 auf, die in der durch die rechteckige Grundfläche 210 definierten Ebene in einer ersten Richtung angeordnet und angepasst sind, um bei Verwendung in das polymere Material des T-förmigen Profilschlauchs 5 einzudringen und eine Relativbewegung zwischen Befestigungselement 200 und T-förmigem Profilschlauch 5 in einer Richtung parallel zu der zentralen Längsachse 212 zu verhindern. Wie aus der Darstellung ersichtlich ist, ist die erste Richtung in der Ebene senkrecht zur zentralen Längsachse 212 ausgerichtet. Der Vollständigkeit halber wurde in der Darstellung auch die Normale zu der durch die Grundfläche 210 definierten Ebene im Bereich der Bohrungen 234 eingezeichnet.

Das Befestigungselement 200 unterscheidet sich von den oben beschriebenen Befestigungselementen 1; 100 dadurch, dass es keinen Boden aufweist. Die resultierende Funktion ist jedoch gleich zu der oben für die Befestigungselemente 1; 100 beschriebenen Funktion, so dass auf die entsprechenden Ausführungen verwiesen wird, um Wiederholungen zu vermeiden. Wie den Darstellungen der Figuren 8 und 9 entnehmbar ist, ist es insbesondere bevorzugt, dass zwei dieser Befestigungselemente 200 an gegenüberliegenden Seiten in der T-förmigen Aussparung 44 angeordnet sind.

Alternativ oder zusätzlich zu den Bohrungen 234 als Verbindungsmittel kann, analog zu dem Befestigungselement 1, mindestens eine U-förmige Aussparung vorgesehen sein, so dass eine Lasche bereitgestellt ist, die in eine Richtung aus der durch die Grundfläche 210 definierten Ebene hinaus vorsteht und einseitig mit der rechteckigen Grundfläche 210 verbunden ist. Das offene Ende der U-förmigen Aussparung weist vorzugsweise in die erste Richtung. Auch auf diese Weise kann das Befestigungselement 200 besonders effektiv gegen eine Relativbewegung entlang der zentralen Längsachse 212 in der Verbindungsanordnung 3 befestigt werden, insbesondere in der T-förmigen Aussparung 44 im Basiselement 40.

Figur 10 zeigt eine weitere Möglichkeit zur Realisierung der Fixierung des Profilschlauchs 5 in der Verbindungsanordnung 3. Das perspektivisch und im Teilschnitt gezeigte modifizierte Basiselement 340 weist eine Mehrzahl integral damit ausgebildeter Verriegelungszähne 326 auf. Die Verriegelungszähne 326 sind im Bereich der Stufe 350 beispielsweise durch Fräsen gebildet. Anschließend wurde das Material der Stufe 350 zwischen dem Kopfbereich 348 und der Mehrzahl von Verriegelungszähnen 326 abgetragen, beispielsweise ebenfalls mittels Fräsen. Im Übrigen entspricht der Aufbau des Basiselements 340 dem Aufbau des Basiselements 40. Ein Vorteil dieser Ausgestaltung ist, dass kein separates Befestigungselement erforderlich ist, um den Profilschlauch 5 in der Verbindungsanordnung 3 zu fixieren. Nachteilig ist hingegen das aufwändigere Herstellungsverfahren für das Basiselement 340.

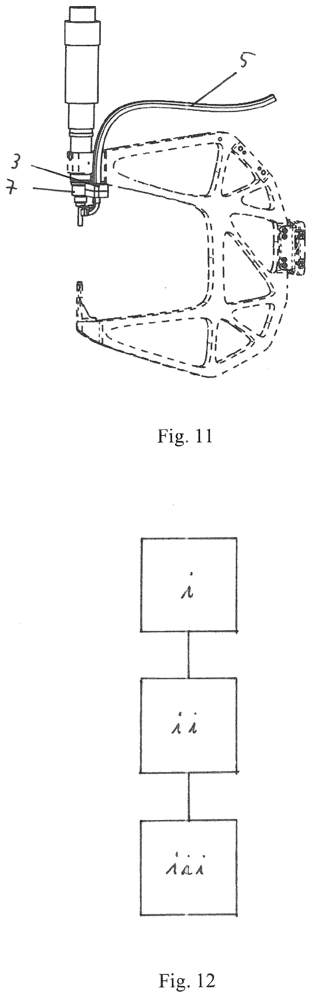

Der Vollständigkeit halber zeigt Figur 11 den Aufbau aus Setzgerät 7 und der Verbindungsanordnung 3, um den Profilschlauch 5 mit dem Setzgerät 7 zu verbinden.

Nun bezugnehmend auf die Figur 12 wird eine Ausführungsform eines Herstellungsverfahrens erläutert. In einem ersten Schritt i erfolgt ein Bereitstellen eines Blechmaterials. Nachfolgend erfolgt in Schritt ii ein Bearbeiten des Blechmaterials, insbesondere mittels Ätzen, so dass das Befestigungselement 1; 100 insbesondere gemäß einer der oben beschriebenen Ausführungsformen in einem Rohzustand vorliegt. Abschließend werden die Bereiche des Befestigungselements 1; 100 mit der Mehrzahl von Verriegelungszähnen in Schritt iii gebogen, so dass diese einseitig über die erste Oberfläche hinausragen.

Im Hinblick auf die Ausgestaltung des Befestigungselements 200 weist das entsprechende Herstellungsverfahren die Schritte auf: Bereitstellen eines Blechmaterials und Bearbeiten des Blechmaterials, insbesondere mittels Ätzen, so dass das Befestigungselement 200 vorliegt. Im Vergleich zu der ersten Ausgestaltung ist somit kein Biegen der Bereiche des Befestigungselements 200 mit der Mehrzahl von Verriegelungszähnen 226 erforderlich.

Der Vollständigkeit halber und bezogen auf die Ausgestaltung des Basiselements 340 der Verbindungsanordnung 3 mit der Mehrzahl von Verriegelungszähnen 326 weist ein entsprechendes Herstellungsverfahren die Schritte auf: Bereitstellen eines Basiselements 340 mit einer zentralen Längsachse, wobei das Basiselement eine T-förmige Aussparung 344 zur Aufnahme des T-förmigen Profilschlauchs 5 umfasst, die sich in Längsrichtung durch das Basiselement 340 erstreckt und an einem Kopfende 348 offen ist. Danach erfolgt ein Einbringen, insbesondere mittels Fräsen, der Mehrzahl von Verriegelungszähnen 326 im Bereich der Stufe 350 der T-förmigen Aussparung 344 sowie das Abtragen von Material im Bereich der Stufe 350 der T-förmigen Aussparung 344, so dass die Mehrzahl von Verriegelungszähnen 326 über die Stufe 350 hervorsteht. Das Abtragen des Materials kann ebenfalls mittels Fräsen erfolgen. Vorteilhafterweise wird das Basiselement 340 im Rahmen des Herstellungsverfahrens ebenfalls mit einem Verbindungsmittel versehen, um das Basiselement 340 an einem Setzgerät 7 oder einer weiteren Verbindungsanordnung eines weiteren T-förmigen Profilschlauchs befestigen zu können. Hierbei handelt es sich vorzugsweise um mindestens eine Durchgangsbohrung 342, besonders bevorzugt um vorzugsweise mindestens zwei Durchgangsbohrungen 342. Die Durchgangsbohrung 342 verläuft dabei parallel zur zentralen Längsachse. Alternativ zu der oder den Durchgangsbohrungen sind als Verbindungsmittel auch Klammern, Schnellspanner, Stifte, Einrastverbinder, Bajonettverschlüsse und dergleichen bevorzugt. Wie oben beschrieben weist das Basiselement 340 auch eine Bohrung 352 zur Befestigung des Verschlusselements 60 auf.

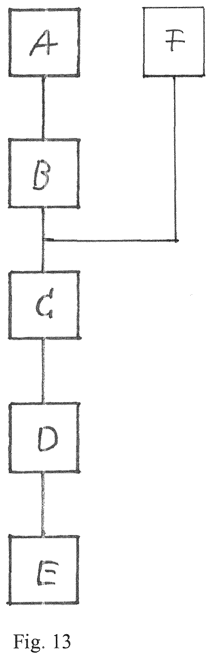

Abschließend und bezugnehmend auf Figur 13 wird eine Ausführungsform eines Verbindungsverfahrens unter Verwendung der Verbindungsanordnung 3 erläutert. In einem ersten Schritt A werden der T-förmigen Profilschlauch 5 sowie die Verbindungsanordnung 3 und das dazugehörige Befestigungselement 1; 100; 200 bereitgestellt. Nun wird in Schritt B das Befestigungselement 1; 100; 200 in der T-förmigen Aussparung 44 im Basiselement 40 der Verbindungsanordnung 3 angeordnet. Alternativ zu den Schritten A und B erfolgt in Schritt F ein Bereitstellen des T-förmigen Profilschlauchs 5 sowie der Verbindungsanordnung 3 mit dem Basiselement 340, das die Mehrzahl von Verriegelungszähnen 340 aufweist, die integral mit der T-förmigen Aussparung 344 ausgebildet sind. In Schritt C erfolgt ein Anordnen des T-förmigen Profilschlauchs 5 in der Verbindungsanordnung 3 so, dass ein Ende des T-förmigen Profilschlauchs 5 bündig mit einer Stirnseite des Basiselements 40 ausgerichtet ist. Anschließend wird in Schritt D der T-förmige Profilschlauch 5 in der T-förmigen Aussparung 44 durch Anbringen des Verschlusselements 60 der Verbindungsanordnung 3 an dem Basiselement 40 fixiert, wodurch die Mehrzahl von Verriegelungszähnen 26; 126 in den T-förmigen Profilschlauch 5 eindringt, vorzugsweise benachbart zu einer Unterseite des Kopfs des T-förmigen Profilschlauchs 5. Danach wird der fixierte T-förmige Profilschlauch 5 mit dem Setzgerät oder einem weiteren T-förmigen Profilschlauch in Schritt E verbunden, insbesondere mit einem weiteren in einer Verbindungsanordnung 3 fixierten T-förmigen Profilschlauch 5.

### 6. Bezugszeichenliste

- 1: Befestigungselement (1. Ausführungsform)
- 3: Verbindungsanordnung
- 5: Profilschlauch
- 7: Setzgerät

- 10: Boden
- 12: zentrale Längsachse
- 14: erste Oberfläche
- 16: zweite Oberfläche
- 18: Durchgangsloch im Boden
- 20: erste Seitenwand
- 22: zweite Seitenwand
- 24: Öffnungen im Übergangsbereich zwischen Boden und erster bzw. zweiter Seitenwand
- 26: Mehrzahl von Verriegelungszähnen
- 28: erste Mehrzahl Verriegelungszähne
- 30: zweite Mehrzahl Verriegelungszähne
- 32: U-förmige Aussparung
- 34: Lasche
- 36: Öffnungen im Übergangsbereich zwischen Lasche und erster bzw. zweiter Seitenwand

- 40: Basiselement
- 42: Durchgangsbohrung
- 44: T-förmige Aussparung
- 46: Schaftbereich
- 48: Kopfbereich
- 50: Stufe
- 52: Bohrung

- 60: Verschlusselement

- 70: Schraube

- 100: Befestigungselement (2. Ausführungsform)
- 110: Boden
- 114: erste Oberfläche
- 116: zweite Oberfläche
- 118: Durchgangsloch im Boden
- 126: Mehrzahl von Verriegelungszähnen
- 128: erste Mehrzahl Verriegelungszähne
- 130: zweite Mehrzahl Verriegelungszähne

- 200: Befestigungselement (3. Ausführungsform)
- 210: Grundfläche
- 212: zentrale Längsachse
- 214: erste Oberfläche
- 216: zweite Oberfläche
- 226: Mehrzahl von Verriegelungszähnen
- 234: Bohrung in der Grundfläche

- 326: Mehrzahl von Verriegelungszähnen
- 340: Basiselement
- 342: Durchgangsbohrung
- 344: T-förmige Aussparung
- 346: Schaftbereich
- 348: Kopfbereich
- 350: Stufe
- 352: Bohrung

## Patentansprüche

1. Eine Verbindungsanordnung (3) zur Verbindung eines T-förmigen Profilschlauchs (5) aus einem polymeren Material mit einem Setzgerät (7) oder einem weiteren T-förmigen Profilschlauch, wobei die Verbindungsanordnung (3) umfasst:
a) ein Basiselement (40; 340) mit einer zentralen Längsachse, das ein Verbindungsmittel aufweist, um das Basiselement (40; 340) an dem Setzgerät (7) oder einer weiteren Verbindungsanordnung eines weiteren T-förmigen Profilschlauchs zu befestigen, und das Basiselement (40; 340) umfasst eine T-förmige Aussparung (44; 344) zur Aufnahme des T-förmigen Profilschlauchs (5), die sich in Längsrichtung durch das Basiselement (40; 340) erstreckt und an einem Kopfende offen ist,
b) ein Verschlusselement (60), mit dem die T-förmige Aussparung (44; 344) senkrecht zur Längsachse verschließbar ist, sowie
c1) ein Befestigungselement (1; 100), das aus einer einteiligen Blechkonstruktion besteht und aufweist: einen rechteckigen Boden (10; 110) mit einer zentralen Längsachse (12), der eine erste Oberfläche (14; 114) sowie eine der ersten Oberfläche (14; 114) gegenüberliegende zweite Oberfläche (16; 116) aufweist, und eine Mehrzahl von Verriegelungszähnen (26; 126), die einseitig über die erste Oberfläche (14; 114) hinausragen und angepasst sind, um bei Verwendung in das polymere Material des T-förmigen Profilschlauchs (5) einzudringen und eine Relativbewegung zwischen Befestigungselement (1; 100) und T-förmigem Profilschlauch (5) in einer Richtung parallel zu der ersten Oberfläche (14; 114) zu verhindern, wobei das Befestigungselement (1; 100) in der T-förmigen Aussparung (44) angeordnet ist, insbesondere benachbart zu einem Boden der T-förmigen Aussparung (44), oder
c2) zwei Befestigungselemente (200), die an gegenüberliegenden Seiten in der T-förmigen Aussparung (44) angeordnet sind, wobei jedes Befestigungselement (200) aus einer einteiligen Blechkonstruktion besteht und aufweist: eine rechteckige Grundfläche (210) mit einer zentralen Längsachse (212), die eine erste Oberfläche (214) sowie eine der ersten Oberfläche (214) gegenüberliegende zweite Oberfläche (216) aufweist, eine Ebene definiert, die die zentrale Längsachse enthält, und ein Befestigungsmittel zur Befestigung des Befestigungselements in der Verbindungsanordnung (3) aufweist, und eine Mehrzahl von Verriegelungszähnen (226), die in der durch die rechteckige Grundfläche (210) definierten Ebene in einer ersten Richtung angeordnet und angepasst sind, um bei Verwendung in das polymere Material des T-förmigen Profilschlauchs (5) einzudringen und eine Relativbewegung zwischen Befestigungselement (200) und T-förmigem Profilschlauch (5) in einer Richtung parallel zu der zentralen Längsachse (212) zu verhindern, wobei die erste Richtung senkrecht zur zentralen Längsachse (212) ausgerichtet ist, oder
c3) die T-förmige Aussparung (344) weist eine Mehrzahl integral damit ausgebildeter Verriegelungszähne (326) auf, die insbesondere von einer durch die T-förmige Aussparung (344) gebildeten Stufe (350) in Richtung des Verschlusselements (60) vorstehen und parallel zu einer zentralen Längsachse des Basiselements (340) angeordnet sind.

2. Die Verbindungsanordnung (3) gemäß Patentanspruch 1 mit Merkmal c1) oder c2), bei der die zentrale Längsachse (12) des Befestigungselements (1; 100) und die zentrale Längsachse des Basiselements (40) parallel zueinander ausgerichtet sind.

3. Die Verbindungsanordnung (3) gemäß Patentanspruch 1 mit Merkmal c1) oder c2) oder gemäß Patentanspruch 2, bei der das Befestigungselement (1; 100) mit dem Boden und/oder den Seitenwänden der T-förmigen Aussparung (44) im Basiselement (40) derart verbunden ist, dass es gegen eine Relativbewegung zum Basiselement (40) entlang der zentralen Längsachse gesichert ist, insbesondere mittels einer reib- und/oder formschlüssigen Verbindung, besonders bevorzugt mittels Verschrauben oder Verstiften.

4. Die Verbindungsanordnung (3) gemäß einem der Patentansprüche 1 mit Merkmal c1) oder c2) oder gemäß einem der Patentansprüche 2 oder 3, bei der die T-förmige Aussparung (44) im Basiselement (40) an den Seitenwänden Vertiefungen aufweist, um das Befestigungselement (1; 100; 200) in der T-förmigen Aussparung (44) gegen eine Relativbewegung zum Basiselement (40) entlang der zentralen Längsachse zu sichern.

5. Die Verbindungsanordnung (3) gemäß einem der Patentansprüche 1 bis 4, bei dem in der T-förmigen Aussparung (44; 344) weiterhin ein T-förmiger Profilschlauch (5) angeordnet ist und eine zentrale Längsachse des T-förmigen Profilschlauchs (5) sowie die zentrale Längsachse des Basiselements (40; 340) sind in der Verbindungsanordnung (3) parallel zueinander ausgerichtet.

6. Die Verbindungsanordnung (3) gemäß einem der Patentansprüche 1 bis 5, bei der das Basiselement (40; 340) und/oder das Verschlusselement (60) aus Aluminium oder Stahl besteht.

7. Die Verbindungsanordnung (3) gemäß einem der vorhergehenden Patentansprüche in Verbindung mit Merkmal c1) von Patentanspruch 1, wobei die Mehrzahl von Verriegelungszähnen (26; 126) des Befestigungselements (1; 100) mindestens einen ersten Verriegelungszahn und mindestens einen zweiten Verriegelungszahn umfasst, die bezogen auf die zentrale Längsachse (12) vorzugsweise spiegelsymmetrisch angeordnet sind.

8. Die Verbindungsanordnung (3) gemäß Patentanspruch 7, bei der die Mehrzahl von Verriegelungszähnen (26; 126) des Befestigungselements (1; 100) eine Mehrzahl erster Verriegelungszähne (28; 128) und eine Mehrzahl zweiter Verriegelungszähne (30; 130) umfasst, wobei die Mehrzahl erster Verriegelungszähne (28; 128) und die Mehrzahl zweiter Verriegelungszähne (30; 130) vorzugsweise parallel zur zentralen Längsachse (12) ausgerichtet sind.

9. Die Verbindungsanordnung (3) gemäß einem der vorhergehenden Patentansprüche in Verbindung mit Merkmal c1) von Patentanspruch 1, bei der sich von dem Boden (10) des Befestigungselements (1; 100) zwei Seitenwände (20, 22) erstrecken, die parallel und spiegelsymmetrisch zur zentralen Längsachse (12) angeordnet sind, und wobei die Mehrzahl von Verriegelungszähnen (26) an einem vom Boden (10) abgewandten Ende der Seitenwände (20, 22) angeordnet ist.

10. Die Verbindungsanordnung (3) gemäß Patentanspruch 9, bei der die Seitenwände (20, 22) des Befestigungselements (1; 100) den Boden (10) seitlich begrenzen und eine Vielzahl an Öffnungen (24) in einem Übergangsbereich zwischen Boden (10) und der jeweiligen Seitenwand (20, 22) vorhanden ist.

11. Die Verbindungsanordnung (3) gemäß Patentanspruch 9 oder 10, bei der in jeder der Seitenwände (20, 22) des Befestigungselements (1; 100) mindestens eine U-förmige Aussparung (32) vorhanden ist, so dass eine Lasche (34) bereitgestellt ist, die in eine Richtung weg von der zentralen Längsachse (12) vorsteht und einseitig mit der Seitenwand (20, 22) verbunden ist, wobei das offene Ende der U-förmigen Aussparung (32) vorzugsweise in Richtung des vom Boden (10) abgewandten Endes der jeweiligen Seitenwand (20, 22) weist.

12. Die Verbindungsanordnung (3) gemäß einem der vorhergehenden Patentansprüche in Verbindung mit Merkmal c1) von Patentanspruch 1, wobei der Boden (10; 110) des Befestigungselements (1; 100):
a) mindestens ein Durchgangsloch (18; 118), vorzugsweise zwei Durchgangslöcher (18; 118), aufweist, vorzugsweise auf der zentralen Längsachse (12), und/oder
b) mindestens eine Lasche aufweist, die einseitig über die zweite Oberfläche hinausragt.

13. Die Verbindungsanordnung (3) gemäß einem der Patentansprüche 1 bis 6 in Verbindung mit Merkmal c2) von Patentanspruch 1, wobei das Befestigungselement (200) als Befestigungsmittel umfasst:
a) mindestens eine U-förmige Aussparung, so dass eine Lasche bereitgestellt ist, die in eine Richtung aus der durch die Grundfläche (210) definierten Ebene hinaus vorsteht und einseitig mit der rechteckigen Grundfläche (210) verbunden ist, wobei das offene Ende der U-förmigen Aussparung vorzugsweise in die erste Richtung weist, und/oder
b) eine Bohrung (234).

14. Ein Setzgerät (7), das mit einem T-förmigen Profilschlauch (5) aus einem polymeren Material mittels der Verbindungsanordnung (3) gemäß einem der Patentansprüche 1 bis 13 verbunden ist.

15. Ein Verbindungsverfahren für einen T-förmigen Profilschlauch (5) mit einem Setzgerät (7) oder einem weiteren T-förmigen Profilschlauch unter Verwendung der Verbindungsanordnung (3) gemäß einem der Patentansprüche 1 bis 13, das die Schritte umfasst:
a1) Bereitstellen (A) des T-förmigen Profilschlauchs (5) sowie der Verbindungsanordnung (3) gemäß einem der Patentansprüche 1 bis 13 mit Merkmal c1) oder c2) und
a2) Anordnen (B) des Befestigungselements (1; 100) in der T-förmigen Aussparung (44) im Basiselement (40) der Verbindungsanordnung (3), oder
b) Bereitstellen (F) des T-förmigen Profilschlauchs (5) sowie der Verbindungsanordnung (300) gemäß Patentanspruch 1 mit Merkmal c3), danach
c) Anordnen (C) des T-förmigen Profilschlauchs (5) in der Verbindungsanordnung (3) so, dass ein Ende des T-förmigen Profilschlauchs (5) bündig mit einer Stirnseite des Basiselements (40) ausgerichtet ist,
d) Fixieren (D) des T-förmigen Profilschlauchs (5) in der T-förmigen Aussparung (44) durch Anbringen des Verschlusselements (60) der Verbindungsanordnung (3) an dem Basiselement (40), wodurch die Mehrzahl von Verriegelungszähnen (26; 126; 326) in den T-förmigen Profilschlauch (5) eindringt, vorzugsweise benachbart zu einer Unterseite des Kopfs des T-förmigen Profilschlauchs (5), und danach
e) Verbinden (E) des fixierten T-förmigen Profilschlauchs (5) mit dem Setzgerät (7) oder einem weiteren T-förmigen Profilschlauch, insbesondere einem weiteren in einer Verbindungsanordnung gemäß einem der Patentansprüche 1 bis 13 fixierten T-förmigen Profilschlauch.

## Claims

1. A connection arrangement (3) for connecting a T-shaped profile hose (5) out of a polymer material with a setting device (7) or with a further T-shaped profile hose, with the connection arrangement (3) comprising:
a) a basic element (40; 340) with a central longitudinal axis having a connecting means for fastening the basic element (40; 340) to the setting device (7) or a further connection arrangement of a further T-shaped profile hose, and the basic element (40; 340) comprises a T-shaped recess (44; 344) for receiving the T-shaped profile hose (5), wherein the T-shaped recess (44; 344) extends in longitudinal direction through the basic element (40; 340) and is open at a head end,
b) a locking element (60) with which the T-shaped recess (44; 344) is closable perpendicular to the longitudinal axis, as well as
c1) a fastening element (1; 100) consisting of a one-part sheet metal construction and comprising: a rectangular bottom (10; 110) with a central longitudinal axis (12) having a first surface (14; 114) and a second surface (16; 116) opposite to the first surface (14; 114), and a plurality of locking teeth (26; 126) which project beyond the first surface (14; 114) on one side and are adapted for penetrating into the polymer material of the T-shaped profile hose (5) in use, and for avoiding a relative movement between fastening element (1; 100) and T-shaped profile hose (5) in a direction parallel to the first surface (14; 114) wherein the fastening element (1; 100) is arranged in the T-shaped recess (44), in particular adjacent to a bottom of the T-shaped recess (44), or
c2) two fastening elements (200) which are arranged on opposite sides in the T-shaped recess (44), wherein each fastening element (200) is made of a one-part sheet metal construction and comprises: a rectangular basic surface (210) with a central longitudinal axis (212) comprising a first surface (214) as well as a second surface (216) opposite to the first surface (214), the rectangular basic surface (210) defining a plane containing the central longitudinal axis, and comprising a fastening means for fastening the fastening element in the connection arrangement (3), and a plurality of locking teeth (226) which are arranged in a first direction in the plane that is defined by the rectangular basic surface (210) and are adapted, so as to penetrate into the polymer material of the T-shaped profile hose (5) and prevent a relative movement between fastening element (200) and T-shaped profile hose (5) in a direction parallel to the central longitudinal axis (212), wherein the first direction is aligned perpendicular to the central longitudinal axis (212) or
c3) the T-shaped recess (344) includes a plurality of locking teeth (326) integrally configured with same, which in particular project from a step (350) formed by the T-shaped recess (344) in the direction of the locking element (60) and are arranged parallel to a central longitudinal axis of the basic element (340).

2. The connection arrangement (3) according to claim 1 with feature c1) or c2) wherein the central longitudinal axis (12) of the fastening element (1; 100) and the central longitudinal axis of the basic element (40) are aligned parallel to one another.

3. The connection arrangement (3) according to claim 1 with feature c1) or c2) or according to claim 2, wherein the fastening element (1; 100) is connected with the bottom and/or the sidewalls of the T-shaped recess (44) in the basic element (40) in a way that it is secured against a relative movement to the basic element (40) along the central longitudinal axis, in particular by means of a friction-fit and/or form-fit connection, particularly preferred by means of screwing or dowelling.

4. The connection arrangement (3) according to one of the claims 1 with feature c1) or c2) or according to one of the claims 2 or 3, wherein the T-shaped recess (44) comprises indentations in the basic element (40) at the sidewalls, so as to secure the fastening element (1; 100; 200) in the T-shaped recess (44) against a relative movement to the basic element (40) along the central longitudinal axis.

5. The connection arrangement (3) according to one of the claims 1 to 4, wherein in the T-shaped recess (44; 344), furthermore, a T-shaped profile hose (5) is arranged and a central longitudinal axis of the T-shaped profile hose (5) as well as the central longitudinal axis of the basic element (40; 340) are arranged parallel to one another in the connection arrangement (3).

6. The connection arrangement (3) according to one of the claims 1 to 5, wherein the basic element (40; 340) and/or the locking element (60) is/are made of aluminum or steel.

7. The connection arrangement (3) according to one of the preceding claims in combination with feature c1) of claim 1, wherein the plurality of locking teeth (26; 126) of the fastening element (1; 100) comprises at least a first locking tooth and at least a second locking tooth, which, with respect to the central longitudinal axis (12), are arranged preferably mirror-symmetrically.

8. The connection arrangement (3) according to claim 7, wherein the plurality of locking teeth (26; 126) of the fastening element (1; 100) comprises a plurality of first locking teeth (28; 128) and a plurality of second locking teeth (30; 130), wherein the plurality of first locking teeth (28; 128) and the plurality of second locking teeth (30; 130) are preferably aligned parallel to the central longitudinal axis (12).

9. The connection arrangement (3) according to one of the preceding claims in combination with feature c1) of claim 1, wherein two sidewalls (20, 22) extend from the bottom (10) of the fastening element (1; 100), wherein the sidewalls (20, 22) are arranged parallel and mirror-symmetrically to the central longitudinal axis (12) and wherein the plurality of locking teeth (26) is arranged at an end of the sidewalls (20, 22) which faces away from the bottom (10).

10. The connection arrangement (3) according to claim 9, wherein the sidewalls (20, 22) of the fastening element (1; 100) laterally limit the bottom (10) and wherein there is a plurality of apertures (24) in a transition portion between bottom (10) and the respective side wall (20, 22).

11. The connection arrangement (3) according to claim 9 or 10, wherein at least a U-shaped recess (32) is present in each of the sidewalls (20, 22) of the fastening element (1; 100) so that a lug (34) is provided which projects in a direction away from the central longitudinal axis (12) and is connected to the sidewall (20, 22) on one side, wherein the open end of the U-shaped recess (32) preferably faces in the direction of the end of the respective sidewall (20, 22) which faces away from the bottom (10).

12. The connection arrangement (3) according to one of the preceding claims in combination with feature c1) of claim 1 wherein the bottom (10; 110) of the fastening element (1; 100):
a) has at least one passage hole (18; 118), preferably two passage holes (18; 118), preferably on the central longitudinal axis (12), and/or
b) has at least one lug projecting beyond the second surface on one side.

13. The connection arrangement (3) according to one of the claims 1 to 6 in combination with feature c2) of claim 1, wherein the fastening element (200) comprising as fastening means:
a) at least a U-shaped recess, so that a lug is provided which projects into one direction from the plane that is defined by the basic surface (210) and is connected with the rectangular basic surface (210) on one side, wherein the open end of the U-shaped recess preferably faces in the first direction, and/or
b) a bore hole.

14. A setting device (7) which is connected with a T-shaped profile hose (5) out of a polymer material by means of the connection arrangement (3) according to one of the claims 1 to 13.

15. A connection method for a T-shaped profile hose (5) with a setting device (7) or a further T-shaped profile hose by using the connection arrangement (3) according to one of the claims 1 to 13, comprising the steps:
a1) providing (A) the T-shaped profile hose (5) as well as the connection arrangement (3) according to one of the claims 1 to 13 with feature c1) or c2) and
a2) arranging (B) the fastening element (1; 100) in the T-shaped recess (44) in the basic element (40) of the connection arrangement (3) or
b) providing (F) the T-shaped profile hose (5) as well as the connection arrangement (300) according to claim 1 with feature c3), after that
c) arranging (C) the T-shaped profile hose (5) in the connection arrangement (3) in a way that an end of the T-shaped profile hose (5) is aligned flush with a face side of the basic element (40),
d) fixing (D) the T-shaped profile hose (5) in the T-shaped recess (44) by arranging the locking element (60) of the connection arrangement (3) at the basic element (40), causing the plurality of locking teeth (26; 126; 326) to penetrate the T-shaped profile hose (5), preferably adjacent to a bottom side of the head of the T-shaped profile hose (5) and after that,
e) connecting (E) the fixed T-shaped profile hose (5) with the setting device (7) or a further T-shaped profile hose, in particular a further T-shaped profile hose that is fixed in a connection arrangement according to one of the claims 1 to 13.

## Revendications

1. Agencement de connexion (3) pour la connexion d'un tuyau profilé en forme de T (5) constitué d'un matériau polymère à un appareil de pose (7) ou à un autre tuyau profilé en forme de T, dans lequel l'agencement de connexion (3) comporte :
a) un élément de base (40 ; 340) doté d'un axe longitudinal central, lequel présente un moyen de connexion permettant de fixer l'élément de base (40 ; 340) à l'appareil de pose (7) ou à un autre agencement de connexion d'un autre tuyau profilé en forme de T, et l'élément de base (40 ; 340) comporte un évidement en forme de T (44 ; 344) destiné à recevoir le tuyau profilé en forme de T (5), lequel s'étend dans la direction longitudinale à travers l'élément de base (40 ; 340) et lequel est ouvert à une extrémité de tête,
b) un élément de fermeture (60) permettant de fermer l'évidement en forme de T (44 ; 344) perpendiculairement à l'axe longitudinal, et
c1) un élément de fixation (1 ; 100), lequel est constitué d'une structure en tôle en une seule pièce et présente : un fond rectangulaire (10 ; 110) doté d'un axe longitudinal central (12), lequel présente une première surface (14 ; 114) ainsi qu'une deuxième surface (16 ; 116) opposée à la première surface (14 ; 114), et une pluralité de dents de verrouillage (26 ; 126), lesquelles font saillie unilatéralement au-delà de la première surface (14 ; 114) et sont adaptées pour s'introduire dans le matériau polymère du tuyau profilé en forme de T (5) lors de l'utilisation et pour empêcher un mouvement relatif entre l'élément de fixation (1 ; 100) et le tuyau profilé en forme de T (5) dans une direction parallèle à la première surface (14 ; 114), dans lequel l'élément de fixation (1 ; 100) est disposé dans l'évidement en forme de T (44), en particulier de façon adjacente à un fond de l'évidement en forme de T (44), ou
c2) deux éléments de fixation (200), lesquels sont disposés sur des côtés opposés dans l'évidement en forme de T (44), dans lequel chaque élément de fixation (200) est constitué d'une structure en tôle en une seule pièce et présente : une surface de base rectangulaire (210) dotée d'un axe longitudinal central (212), laquelle présente une première surface (214) ainsi qu'une deuxième surface (216) opposée à la première surface (214), définit un plan contenant l'axe longitudinal central, et présente un moyen de fixation destiné à fixer l'élément de fixation dans l'agencement de connexion (3), et
une pluralité de dents de verrouillage (226), lesquelles sont disposées dans une première direction dans le plan défini par la surface de base rectangulaire (210) et sont adaptées pour s'introduire dans le matériau polymère du tuyau profilé en forme de T (5) lors de l'utilisation et pour empêcher un mouvement relatif entre l'élément de fixation (200) et le tuyau profilé en forme de T (5) dans une direction parallèle à l'axe longitudinal central (212), dans lequel la première direction est orientée perpendiculairement à l'axe longitudinal central (212), ou
c3) l'évidement en forme de T (344) présente une pluralité de dents de verrouillage (326) réalisées intégralement avec celui-ci, lesquelles font en particulier saillie en direction de l'élément de fermeture (60) à partir d'un gradin (350) formé par l'évidement en forme de T (344) et sont disposées parallèlement à un axe longitudinal central de l'élément de base (340).

2. Agencement de connexion (3) selon la revendication 1 avec la caractéristique c1) ou c2), dans lequel l'axe longitudinal central (12) de l'élément de fixation (1 ; 100) et l'axe longitudinal central de l'élément de base (40) sont orientés parallèlement l'un à l'autre.

3. Agencement de connexion (3) selon la revendication 1 avec la caractéristique c1) ou c2) ou selon la revendication 2, dans lequel l'élément de fixation (1 ; 100) est relié de telle façon au fond et/ou aux parois latérales de l'évidement en forme de T (44) dans l'élément de base (40), qu'il est bloqué contre un mouvement relatif par rapport à l'élément de base (40) le long de l'axe longitudinal central, en particulier au moyen d'une connexion par friction et/ou par complémentarité de forme, de façon particulièrement préférée par vissage ou goupillage.

4. Agencement de connexion (3) selon l'une des revendications 1 avec la caractéristique c1) ou c2) ou selon l'une des revendications 2 ou 3, dans lequel l'évidement en forme de T (44) dans l'élément de base (40) présente des renfoncements au niveau des parois latérales, afin de bloquer l'élément de fixation (1 ; 100 ; 200) dans l'évidement en forme de T (44) contre un mouvement relatif par rapport à l'élément de base (40) le long de l'axe longitudinal central.

5. Agencement de connexion (3) selon l'une des revendications 1 à 4, dans lequel un tuyau profilé en forme de T (5) est en outre disposé dans l'évidement en forme de T (44 ; 344) et un axe longitudinal central du tuyau profilé en forme de T (5) ainsi que l'axe longitudinal central de l'élément de base (40 ; 340) sont orientés parallèlement l'un à l'autre dans l'agencement de connexion (3).

6. Agencement de connexion (3) selon l'une des revendications 1 à 5, dans lequel l'élément de base (40 ; 340) et/ou l'élément de fermeture (60) sont constitués d'aluminium ou d'acier.

7. Agencement de connexion (3) selon l'une des revendications précédentes en association avec la caractéristique c1) de la revendication 1, dans lequel la pluralité de dents de verrouillage (26 ; 126) de l'élément de fixation (1 ; 100) comportent au moins une première dent de verrouillage et au moins une deuxième dent de verrouillage, lesquelles sont disposées de préférence de façon symétrique par rapport à l'axe longitudinal central (12).

8. Agencement de connexion (3) selon la revendication 7, dans lequel la pluralité de dents de verrouillage (26 ; 126) de l'élément de fixation (1 ; 100) comportent une pluralité de premières dents de verrouillage (28 ; 128) et une pluralité de deuxièmes dents de verrouillage (30 ; 130), dans lequel la pluralité de premières dents de verrouillage (28 ; 128) et la pluralité de deuxièmes dents de verrouillage (30 ; 130) sont orientées de préférence parallèlement à l'axe longitudinal central (12).

9. Agencement de connexion (3) selon l'une des revendications précédentes en association avec la caractéristique c1) de la revendication 1, dans lequel deux parois latérales (20, 22) s'étendent à partir du fond (10) de l'élément de fixation (1 ; 100), lesquelles sont disposées parallèlement et de façon symétrique par rapport à l'axe longitudinal central (12), et dans lequel la pluralité de dents de verrouillage (26) sont disposées à une extrémité des parois latérales (20, 22) opposée au fond (10).

10. Agencement de connexion (3) selon la revendication 9, dans lequel les parois latérales (20, 22) de l'élément de fixation (1 ; 100) délimitent le fond (10) latéralement et une multitude d'ouvertures (24) sont prévues dans une région de transition entre le fond (10) et la paroi latérale (20, 22) respective.

11. Agencement de connexion (3) selon la revendication 9 ou 10, dans lequel il est prévu au moins un évidement en forme de U (32) dans chacune des parois latérales (20, 22) de l'élément de fixation (1 ; 100), de manière à fournir une languette (34), laquelle fait saillie dans une direction s'éloignant de l'axe longitudinal central (12) et laquelle est reliée unilatéralement à la paroi latérale (20, 22), dans lequel l'extrémité ouverte de l'évidement en forme de U (32) est dirigée de préférence en direction de l'extrémité de la paroi latérale (20, 22) respective opposée au fond (10).

12. Agencement de connexion (3) selon l'une des revendications précédentes en association avec la caractéristique c1) de la revendication 1, dans lequel le fond (10 ; 110) de l'élément de fixation (1 ; 100) :
a) présente au moins un trou de passage (18 ; 118), de préférence deux trous de passage (18 ; 118), de préférence sur l'axe longitudinal central (12), et/ou
b) présente au moins une languette, laquelle fait saillie unilatéralement au-delà de la deuxième surface.

13. Agencement de connexion (3) selon l'une des revendications 1 à 6 en association avec la caractéristique c2) de la revendication 1, dans lequel, en tant que moyen de fixation, l'élément de fixation (200) comporte :
a) au moins un évidement en forme de U, de manière à fournir une languette, laquelle fait saillie dans une direction à partir du plan défini par la surface de base (210) et laquelle est reliée unilatéralement à la surface de base rectangulaire (210), dans lequel l'extrémité ouverte de l'évidement en forme de U est dirigée de préférence dans la première direction, et/ou
b) un alésage (234).

14. Appareil de pose (7), lequel est relié à un tuyau profilé en forme de T (5) constitué d'un matériau polymère au moyen de l'agencement de connexion (3) selon l'une des revendications 1 à 13.

15. Procédé de connexion pour un tuyau profilé en forme de T (5) à un appareil de pose (7) ou à un autre tuyau profilé en forme de T, à l'aide de l'agencement de connexion (3) selon l'une des revendications 1 à 13, lequel comporte les étapes suivantes :
a1) mise à disposition (A) du tuyau profilé en forme de T (5) ainsi que de l'agencement de connexion (3) selon l'une des revendications 1 à 13 avec la caractéristique c1) ou c2) et
a2) disposition (B) de l'élément de fixation (1 ; 100) dans l'évidement en forme de T (44) dans l'élément de base (40) de l'agencement de connexion (3), ou
b) mise à disposition (F) du tuyau profilé en forme de T (5) ainsi que de l'agencement de connexion (300) selon la revendication 1 avec la caractéristique c3), puis
c) disposition (C) du tuyau profilé en forme de T (5) dans l'agencement de connexion (3) de telle façon qu'une extrémité du tuyau profilé en forme de T (5) est orientée en affleurement avec une face avant de l'élément de base (40),
d) fixation (D) du tuyau profilé en forme de T (5) dans l'évidement en forme de T (44) par apposition de l'élément de fermeture (60) de l'agencement de connexion (3) sur l'élément de base (40), moyennant quoi la pluralité de dents de verrouillage (26 ; 126 ; 326) s'introduisent dans le tuyau profilé en forme de T (5), de préférence de façon adjacente à un côté inférieur de la tête du tuyau profilé en forme de T (5), et puis
e) connexion (E) du tuyau profilé en forme de T fixé (5) à l'appareil de pose (7) ou à un autre tuyau profilé en forme de T, en particulier à un autre tuyau profilé en forme de T fixé dans un agencement de connexion selon l'une des revendications 1 à 13.
